# EUROPÄISCHE PATENTANMELDUNG

(11) **EP 1 256 378 A2**
(43) Veröffentlichungstag der Anmeldung: **13.11.2002**
(21) Anmeldenummer: 02009277.1
(22) Anmeldetag: 29.04.2002
(51) Int. Cl.: B01J 19/00

(54) **Vorrichtung und Verfahren zur paralellen Durchführung von Experimenten**

(30) Priorität: 10.05.2001 DE 10122491
(71) Anmelder: BAYER AG, 51368 Leverkusen (DE)
(72) Erfinder: Jähn, Peter, 51375 Leverkusen (DE); Wiessmeier, Georg, Dr., 51467 Bergisch Gladbach (DE); Krumbach, Bernhard, 51375 Leverkusen (DE); Rose, Reinhold, 51371 Leverkusen (DE); Seibert, Thomas, 51377 Leverkusen (DE); Krautkrämer, Rainer, 51469 Bergisch Gladbach (DE)

(57) **Zusammenfassung**

Es wird eine modulare Vorrichtung und ein Verfahren zur parallelen Durchführung von Experimenten an Prozessstoffen für die Entwicklung von technischen Verfahren beschrieben. Die modulare Vorrichtung eignet sich insbesondere zur miniaturisierten, automatisierten Durchführung komplexer Verfahren. Die Vorrichtung besteht wenigstens aus einer Vielzahl von Einzelreaktoren (1) zur Aufnahme der Prozessstoffe (10), wobei die Einzelreaktoren (1) unabhängig voneinander wenigstens bezüglich ihres inneren Drucks und ihrer Temperatur und der Drehzahl steuerbar oder regelbar sind und wobei die Einzelreaktoren (1) mindestens aufgebaut sind aus:
je einer druckfesten Kammer (2, 2a, 2b, 2c, 2d, 2e,) mit einem separierbaren Probengefäß (12), gegebenenfalls je einer Rührvorrichtung (4),
je einer Heizeinrichtung (31) und/oder einer Kühleinrichtung (32) zur Temperierung des Probengefäßes (12),
einer Kontrolleinheit (700) zur Kontrolle oder Regelung wenigstens des Drucks und der Temperatur in den Einzelreaktoren (1),
je einem druckfesten Deckel (21; 22; 23; 24; 25; 26.....29), wobei die einzelnen Deckel (21; 22; 23; 24; 25; 26; .... 29) und/oder die Kammern (2, 2a, 2b, .... 2e) unabhängig voneinander Zuleitungen (8) und gegebenenfalls Ableitungen (9) für einzelne Prozessstoffe aufweisen, und mehrere Deckel (21; 22; 23; 24; 25; 26 .... 29 ) der Kammern (2a, 2b, 2c, 2d, 2e,) mittels eines gemeinsamen Verschlussmittels (11) simultan verschließbar sind.

## Beschreibung

Die vorliegende Erfindung betrifft insbesondere ein Verfahren und eine Vorrichtung zur effizienten Durchführung von Experimenten unter betriebsnahen Bedingungen für die Entwicklung von Verfahren, insbesondere von chemischen und physikalischen Verfahren. Die Vorrichtung zur Durchführung der dazu miniaturisierten und parallelisierten Experimente umfasst die Einzelbehältnisse, in denen die Experimente durchgeführt werden, die Verteilung und Zuführung der benötigten Substanzen in die Einzelbehältnisse, Sensoren, Aktoren, Prozessleittechnik und Analytik. Das Verfahren umfasst den sicheren, automatischen Ablauf der Experimente inklusive der Initialisierung, der Einstellung aller Reaktionsparameter, der Dosierung von Substanzen, der Probenentnahme und der Wiederherstellung des Ausgangszustandes sowie der Übergabe der während der Experimente erfassten Daten an eine Datenbank.

Die Effizienz vieler Entwicklungen auf experimenteller Basis kann durch Miniaturisierung, Automatisierung und Parallelisierung gesteigert werden. Insbesondere bei der Wirkstoff-Forschung für Medikamente und Pflanzenschutzmittel hat sich diese Vorgehensweise bereits durchgesetzt: das sogenannte High-Throughput Screening (HTS) mit bis zu 100.000 Experimenten pro Tag ist dort etablierter Stand der Technik. Aber auch auf anderen Gebieten, wie der Katalysator-, Material- und Verfahrensentwicklung, hat die Entwicklung parallelisierter Screening-Methoden Einzug gehalten. Dabei werden Katalysatoren, Rezepturen oder Reaktionsparameter variiert. Die Planung der Experimente kann nach rationalen, statistischen, kombinatorischen oder evolutionären Ansätzen erfolgen. Für die letzt genannten Anwendungen können die technischen Anforderungen bei der Durchführung von Experimenten wesentlich komplexer als beim HTS der Wirkstoffforschung sein (z.B. durch wechselnde Verfahrensparameter: Temperatur, Druck, Rühren usw.). Deshalb wurden in der Vergangenheit verschiedene parallelisierte Systeme veröffentlicht und auf den Markt gebracht.

Bei den gebräuchlichsten und einfachsten Systemen für die Durchführung von drucklosen Parallelreaktionen handelt es sich um Reaktionsblöcke, bei denen in massive Blöcke Bohrungen zur Aufnahme von Reagenzgläsern der verschiedensten Größen eingebracht sind. Die Temperierung der Reagenzgläser erfolgt über das umgebende Blockmaterial entweder elektronisch oder mittels Wärmeträgerfluid. Eine individuelle Erfassung der Temperatur in den Reagenzgläsern ist in den meisten Fällen nicht vorgesehen. Die Substanzen, die sich in den Reagenzgläsern befinden, können mit individuell einstellbarer oder überall gleicher Drehzahl durch Rühren vermischt werden. Die Zugabe von Substanzen kann diskontinuierlich über Septen erfolgen. In den meisten Fällen ist das Überleiten von Inertgas mittels eines zentralen Gasverteilers möglich. Die Blöcke sind derart aufgebaut, dass in diesen in verschiedenen Ebenen in Form von dicken Platten auch unterschiedliche Temperaturzonen realisiert werden können (z.B. für Reaktionen unter Rückfluss). Derartige Systeme werden beispielsweise von der Firma H&P, Oberschleißheim/D unter der Produktbezeichnung Variomag® angeboten. Bei anderen bekannten Vorrichtungen zur Parallelsynthese erfolgt die Durchmischung in jedem Reagenzglas durch axial geführte Magnete. Amplitude und Frequenz des Hubs können vorgegeben werden. Die Temperierung erfolgt durch eine Heizplatte oder durch Eintauchen des gesamten Reaktorblocks in eine Kältemischung. Die beschriebenen Reaktorblöcke können unter Normaldruck bei Temperaturen zwischen ca. -80 und ca. 300°C betrieben werden. Der Parallelisierungsgrad, d.h. die Anzahl der in einer Vorrichtung vorhandenen Experimentgefäße, beträgt in der Regel zwischen 10 und 50. Die Reaktionsblöcke sind konstruktiv meist so ausgeführt, dass sie mittels einer automatisierten Pipette (sogenannter Liquid-Handler) bedient werden können.

Aus der Tatsache, dass mit den oben beschriebenen Reaktionsblöcken nur wenige der Arbeitsschritte einer Synthese durchgeführt werden konnten, resultierte die Entwicklung einer weiteren Generation von Reaktionsblöcken. Bei dieser neuen Generation können die Bedingungen für die einzelnen Reagenzgläser - oder allgemeiner auch Inliner genannt - mehr oder weniger individuell und automatisch vorgegeben sowie überwacht werden. Das Dosieren von Gasen und Flüssigkeiten und das Abtrennen und Entnehmen von Proben sind bei diesen Reaktionsblöcken ebenso möglich. Die Vorgabe der Synthese-Parameter kann teilweise über programmierbare Steuergeräte erfolgen. Beispiele für diese Entwicklung sind die aus der WO 98/39099 bekannte Vorrichtung oder der in der Patentschrift US-A-5,762,881 beschriebene Reaktionsblock. Diese Systeme wurden in einem weiteren Schritt automatisiert und mit einem Flüssigkeitsaufgabesystem (Liquid-Handler) kombiniert, so dass von der Zugabe der Substanzen bis hin zur Injektion in ein Analysengerät die Verfahrensschritte automatisiert erfolgen. Die realisierbaren Druck- und Temperaturbereiche entsprechen aber denen der oben beschriebenen einfachen bekannten Reaktionsblöcke.

Die bis hier beschriebenen Systeme dienen im wesentlichen der parallelisierten Synthese von organischen, chemischen Substanzen oder der Syntheseoptimierung. In letzter Zeit stoßen Apparate auf größeres Interesse, mit deren Hilfe Materialeigenschaften auch bei extremeren Bedingungen mit parallelisierten Methoden getestet werden können. Dazu zählen beispielsweise Supraleiter, Materialien mit Luminiszenzeigenschaften oder Katalysatoren (vergleiche z.B. WO 96/11878). Die Offenlegungsschrift WO 00/09255 beschreibt einen Parallelreaktor und dessen Verwendung für die Herstellung, Testung und Charakterisierung von Materialien. Die Bedingungen des Prozesses werden erfasst und kontrolliert. In dieser Druckschrift sind verschiedene Optionen eines Parallelreaktors beschrieben: Temperaturkontrolle und -monitoring mit Anwendung für Kalorimetrie, Rührersysteme mit Anwendung zur Viskositätsverfolgung, Mechanische Oszillatoren mit Anwendung zur Viskositätsmessung, Drucksensorik mit Anwendung zur Bestimmung des Gasverbrauchs, automatisiertes Druckdosier-System, Analyse der experimentellen Daten. Die kommerziell erhältlichen individuell rührbaren und global temperierten 10 ml-Einzelreaktoren können bis zu einem Druck von 100 bar betrieben werden. Die Gaszufuhr kann druckkontrolliert für jeden Einzelreaktor erfolgen.

Der jeweilige Einsatzbereich der durch den oben beschriebenen Stand der Technik aufgeführten Parallelreaktor-Systeme ist hinsichtlich der experimentellen Bedingungen eingeschränkt. Die absolute obere Druckgrenze liegt bei ca. 200 bar. Temperaturen über 350°C können bislang nicht in parallel betriebenen Einzelgefäßen realisiert werden. Auch ist nicht bekannt, dass eine kontinuierliche Dosierung von Gasen und/oder Flüssigkeiten bei diesen extremen Bedingungen möglich ist.

Deshalb liegt der vorliegenden Erfindung folgende Aufgabe zugrunde: es soll ein auch für extreme experimentelle Bedingungen geeignetes automatisiertes, parallelisiertes Reaktorsystem in miniaturisierter Ausführung realisiert werden, das zusätzlich sehr leicht an sehr unterschiedliche experimentelle Bedingungen angepasst und gleichzeitig sicher betrieben werden kann. Unter einem Reaktorsystem soll im folgenden eine Vorrichtung bestehend aus mehreren Einzelreaktoren, in welchen allgemein chemische oder physikalische Verfahren durchgeführt werden können, verstanden werden.

Mit diesem Reaktorsystem sollen unter technikumsähnlichen realen Betriebsbedingungen optimale reproduzierbare Versuchsbedingungen oder Zusammensetzungen gefunden werden indem Menge und Verhältnis der beteiligten Stoffe und verfahrenstechnische Prozessparameter variiert werden. Die verfahrenstechnische Optimierung beispielsweise verlangt bei schon optimierten konstanten Reaktionspartnern, dass durch weitere Variation von Temperatur und/oder Druck und/oder Rührenergie die Reaktionsgeschwindigkeit optimiert wird. Dies verlangt von der Technik einen hohen Anteil von Steuerung und Regulierung, da jeder Einzelreaktor individuell steuerbar und betreibbar sein muss.

Beide Fragestellungen sind von hoher wirtschaftlicher Bedeutung, damit Laborerkenntnisse auch auf direkterem Wege in die betriebliche Praxis umgesetzt werden können.

Gegenüber den bekannten Reaktorblöcken sollte die Vorrichtung auf einfache Weise und schnell an neue Versuchsbedingungen anpassbar sein. Dazu gehört sowohl eine schnelle Zugänglichkeit der Reaktionskammern nach Versuchsende sowie ein schnelles, insbesondere druckdichtes Wiederverschließen der Kammern.

Mit dieser Vorrichtung sollen auch die apparativen Möglichkeiten eines physikalisch-chemisch ausgerichteten Labors wesentlich verbessert werden um insbesondere wechselnde Aufgabenstellungen bei hoher Genauigkeit und Reproduzierbarkeit hinsichtlich Druck, Temperatur, Rührgeschwindigkeit und Versuchsstrategie leicht durchführen zu können. Wechselnde Aufgabenstellungen bedeutet, dass Temperaturen von -80°C bis 400°C eingestellt werden können, bei einem absoluten Druck von bis zu 400 bar. Diese Temperatur- und Druckbereiche stellen hohe Anforderungen an die Technik des Gesamtsystems, so dass bekannte Reaktorsysteme und Systemkomponenten, wie manuelle Ventile, steuerbare Armaturen, Rohrleitungsverschraubungen, Reaktoren und Temperiersysteme in der Regel nicht verwendet werden können.

Die erweiterte Aufgabenstellung erfasst die gesamte Versuchsdurchführung eines Experimentes, d.h., das parallele Reaktorsystem soll mit den Ausgangskomponenten eines Versuchs in gewünschter Menge manuell oder automatisch beladen werden, so dass anschließend alle Folgeschritte einer Versuchsdurchführung bei definierten Bedingungen automatisch erfolgen. Die Einzelvorgänge eines Versuchs bestehen aus dem parallelen oder sequenziellen Zusammenbringen und/oder Dosieren von einer oder mehreren flüssigen und oder gasförmigen und/oder festen Substanzen unter kontrollierten und definierten Versuchsbedingungen. Dazu gehört auch, dass z.B. eine Reaktion mit kurzem zeitlichen Verlauf bei hoher Temperatur durchgeführt werden kann, unter Ausschaltung der bei bekannten Reaktorsystemen konstruktionsbedingt langen Aufheizzeit.

Des weiteren müssen Experimentverläufe häufig druckgesteuert und druckkontrolliert werden, um z. B. einen Reaktionsverlauf nach verfahrenstechnischen Gesichtspunkten steuern und erkennen zu können. Eine weitere automatisierte Möglichkeit zur Steuerung eines Experiments sollte durch ein Probeentnahmesystem in Verbindung mit geeigneten Analysegeräten erfolgen. Das Ableiten und/oder kontrollierte Ausschleusen von z.B. gasförmigen Reaktionsnebenkomponenten aus dem Reaktionsraum vom Einzelbehälter unter Zurückhaltung der verwendeten Ausgangskomponenten, z.B. durch Kondensation, sollte prinzipiell möglich sein.

Im Falle der Durchführung einer chemischen Reaktion soll mit der Vorrichtung sowohl eine Reaktionsbedingung als auch eine Reaktionsführung eingestellt werden können, die denen des technischen Prozesses entsprechen. Unter Experimenten werden hier nicht allein chemische Reaktionen verstanden, sondern auch physikalische Zustandsänderungen von untersuchten Stoffen: z.B. Kristallisation, Löslichkeitsversuche, Beständigkeitstests usw. Die Vorrichtung soll insbesondere auch die Möglichkeit bieten, mehrstufige chemische Synthesen automatisiert und kontinuierlich zu betreiben, so dass ein hoher Rationalisierungseffekt im Bereich von Laboratorien erzielt wird.

Viele chemische Reaktionen setzen hohe Reaktionswärmemengen frei, so dass eine reproduzierbare Versuchsdurchführung bei konstanten Parametern ein leistungsfähiges schnell reagierendes Temperiersystem erfordert. Ist der Reaktionsverlauf exotherm, so werden in Abhängigkeit von der Versuchsführung und der Versuchszeit verschieden hohe Reaktionswärmen frei. Häufig ist die freigesetzte Reaktionswärme zu Beginn einer Reaktion sehr hoch, so dass mit zunehmender Versuchszeit die Exothermie abnimmt. Aus dieser Tatsache resultiert die besondere Forderung nach einer schnell reagierenden und leistungsstarken, steuerbaren Temperierung. Viele Reaktionen verlaufen sehr schnell. Dabei ist es besonders wichtig die zu temperierenden Massen der apparativen Komponenten, die als Energiespeicher dienen, so zu gestalten, dass ein Temperiersystem schnell, d.h. im Bereich von nur wenigen Sekunden, reagiert und dadurch die Temperatur der Reaktion im Reaktionsapparat konstant gehalten wird. Bei dieser besonderen Aufgabenstellung ist es häufig notwendig, unterschiedliche Temperiermedien zu verwenden, um die Reaktorinnentemperatur steuern und konstant halten zu können. Als Temperiermedien können Luft, Kühlwasser oder gekühlte Sole eingesetzt werden. Die Kühlmedien wirken aufgrund ihrer spezifischen Wärmekapazitäten unterschiedlich intensiv, so dass je nach Reaktionsfortschritt verschieden große Reaktionswärmemengen mit dem spezifischen Kühlmedium abgeführt wird. Diese schnell reagierende Temperatursteuerung des Reaktionsraumes erfordert zusätzlich steuerbare Ventile mit besonders geringen Schaltzeiten.

Besonderes Gewicht bei der Durchführung von parallelisierten Hochdruckversuchen (Druck bis 400 bar bei Temperaturen bis 300°C) im verkleinerten Maßstab ( <10 ml Einsatzvolumen) hat die Dichtigkeit der gesamtem Apparatur. Geringste Undichtigkeiten in der Gesamtapparatur an z.B. Ventilen oder handelsüblichen Schneidring- oder Klemmringverschraubungen machen alle Ergebnisse unbrauchbar. Die Betrachtung eines technischen Reaktorsystems, mit dem parallelisiert ein ganzheitlicher Versuchsablauf unter chemischen und verfahrenstechnischen Gesichtspunkten durchgeführt werden soll, zeigt in der technischen Ausführung häufig mehr als 30 Verbindungsstellen pro Einzelreaktorsystem, an denen Undichtigkeiten auftreten können. Werden diese Verbindungsstellen multipliziert mit dem Parallelisierungsgrad sind leicht mehrere hundert potentielle Undichtigkeitsstellen auf engstem Raum vorhanden, die auf Undichtigkeit überprüft werden müssen und dem Betreiber ein effizientes Arbeiten mit dem miniaturisierten Parallel-Reaktorsystem unmöglich machen. Aus diesem Grunde sind Alternativen zu bekannten Verbindungssystemen zu suchen, die ein besseres Dichtverhalten zeigen bzw. die derartige lösbare Verbindungsstellen vermeiden.

Gegenstand der Erfindung, durch die die vorstehende Aufgabe gelöst wird, ist eine Vorrichtung zur parallelen Durchführung von Experimenten an Prozessstoffen für die Entwicklung von technischen Verfahren, insbesondere von chemischen und physikalischen Verfahren, bestehend wenigstens aus einer Vielzahl, insbesondere mindestens 6, bevorzugt mindestens 12, besonders bevorzugt mindestens 24 Einzelreaktoren zur Aufnahme der Prozessstoffe, wobei die Einzelreaktoren unabhängig voneinander wenigstens bezüglich ihres inneren Drucks und ihrer Temperatur steuerbar oder regelbar sind, dadurch gekennzeichnet, dass die Einzelreaktoren mindestens aufgebaut sind aus: je einer druckfesten Kammer mit einem separierbaren Probengefäß, gegebenenfalls je einer Rührvorrichtung, je einer Heizeinrichtung und/oder einer Kühleinrichtung zur individuellen Temperierung des Probengefäßes, einer Kontrolleinheit zur Kontrolle oder Regelung wenigstens des einzelnen Drucks und der Temperatur in den Einzelreaktoren, je einem druckfesten Deckel, wobei die Deckel und/oder die Kammern unabhängig voneinander Zuleitungen und gegebenenfalls Ableitungen für einzelne Prozessstoffe aufweisen, und mehrere Deckel der Kammern mittels eines gemeinsamen Verschlussmittels, bevorzugt eines Verschlussriegels simultan verschließbar sind.

Der Verschlussriegel ist z.B. manuell oder bevorzugt pneumatisch, hydraulisch oder mittels elektrischem Antrieb verriegelbar. Je nach Anordnung der Einzelreaktoren kann die Verriegelung durch horizontale Verschiebung des Verschlussmittels oder durch eine Drehbewegung des Verschlussriegels bei kreisförmiger Anordnung der Reaktoren erfolgen. Der Verschlussriegel ist insbesondere in zwei Achsrichtungen bewegbar. Die dichtende Vertikalbewegung des Riegels dient zur Verformung der Dichtung zwischen Deckel und druckfester Kammer und ist in der Regel um ein Vielfaches kleiner als die Horizontalbewegung.

Das Verhältnis von Horizontalbewegung zur Vertikalbewegung ist vorzugsweise grösser 100. Durch die schliessende Horizontalbewegung des Riegels, die typischerweise dem halben Reaktorachsabstand entspricht, werden Deckel und Kammer vertikal eng in eine Dichtstellung fixiert und arretiert oder nach Versuchsende wieder frei gegeben, um den Deckel von der Kammer zu trennen. Die nach der Horizontalbewegung folgende Vertikalbewegung des Riegels bringt eine gewünschte Verformungskraft auf die zwischen Deckel und Kammer positionierte Dichtung auf. Je nach Automatisierungsgrad der Vorrichtung kann die vertikal aufzubringende Dichtkraft zusätzlich elektrisch, pneumatisch bzw. hydraulisch erzeugt werden. Je nach Versuchsbedingungen kann eine bevorzugte Ausführungsform gewählt werden, bei der simultan mit der Horizontalbewegung des Riegels das Reaktionssystem dicht verschlossen wird. In diesem Fall befindet sich eine keilförmige Fläche am unteren Riegelarm oder am oberen Rand des druckfesten Deckelflansches, die im schließenden Fixierzustand des Riegels eine vertikal wirkende Kraft auf die eingelegte Weichdichtung erzeugt und sie verpresst, so dass alle Einzelreaktoren des Reaktionssystems dicht schließen.

Durch die erfindungsgemässe Verschlusstechnik wird das fehlerbehaftete manuelle Verschliessen von parallel angeordneten druckfesten Einzelbehältern vermieden, so dass im automatisierten Betrieb keine zeitliche Verzögerung auftritt. Für Versuchsdurchführungen unter besonders hohem Druck ist die automatisierte vertikale Schliessbewegung vorzugsweise mit mehreren separaten hydraulischen Zylindern durchzuführen, damit der horizontale Antrieb in seinen räumlichen Abmessungen kompakt bleibt.

Mehrere Einzelreaktoren sind bevorzugt blockweise in einer Aufnahmeeinheit zusammengefasst.

Die Anordnung der Vielzahl von Einzelreaktoren zueinander kann parallel in Reihen oder auch konzentrisch erfolgen.

Bevorzugt sind die Heiz- bzw. Kühleinrichtungen und/oder die Zuleitungen und Ableitungen für Prozessstoffe mit mindestens einer Versorgungseinheit verbunden.

Eine besonders bevorzugte Ausführung der Vorrichtung ist dadurch gekennzeichnet, dass die Kühleinrichtung mit wechselnden Temperiermedien und/oder simultan mit verschiedenen Temperiermedien, insbesondere mit Luft, Öl und Wasser betreibbar ist, deren Zulauf durch die Kontrolleinheit steuerbar oder regelbar ist.

Die Einzelreaktoren sind insbesondere bevorzugt über den gesamten Bereich von 1 bar bis 400 bar und von -80°C bis +400°C und/oder gegebenenfalls bezüglich ihrer Rührerdrehzahl bis 2 000 upm unabhängig voneinander steuerbar ausgebildet.

Besonders bevorzugt sind mehrere Einzelreaktoren über Leitungen im Deckel und/oder in der druckfesten Kammer mit der zugehörenden Versorgungseinheit und/oder einer Stoff-Verteilereinheit verbunden. Des weiteren kann eine Temperiereinheit, bestehend aus einer Heizeinrichtung und/oder Kühleinrichtung, ebenfalls mit einer Stoff-Verteilereinheit verbunden sein. Die Stoff-Verteilereinheit nimmt vorzugsweise Aktoren und die Versorgungseinheit nimmt beispielsweise erforderliche Sensoren auf und bilden gleichzeitig die Schnittstelle für die Verbindung zu einer Interfaceeinheit, z.B. in Form von elektrischen Platinen, an der das Prozessleitsystem oder die Kontrolleinheit angekoppelt wird. Die Stoff-Verteilereinheit ist bevorzugt ein miniaturisiertes dichtungsarmes Verteilungsmodul in besonders kompakter Ausführungsform, welches stabil ist gegen die hohen Druck- und Temperaturanforderungen der Einzelreaktoren. Stoff-Verteilereinheiten mit den aufgesetzten Aktoren können in unmittelbarer Nähe der Einzelreaktoren positioniert werden und bilden mit den verstopfungsunempfindlichen Zu- und Ableitungen den Abschluss der Druckräume der Einzelreaktoren. Das Volumen der Einzelreaktoren wird dabei nur unwesentlich vergrössert. Die Stoff-Verteilereinheit kann auch zur individuellen Temperierung und/oder Kühlung der Einzelreaktoren genutzt werden. Durch die besonders kompakte Bauform kann mindestens ein Stoff-Verteiler mit zugehörigen Aktoren in die Aufnahmeeinheit montiert werden.

Als Probengefäße können z.B. konventionelle Rollrandgläser dienen. Sind Kammer und Probengefäß insbesondere aus einem Stück gebildet, so ist die Wandauskleidung der Kammer mit einer inerten, korrosionsbeständigen Beschichtung zweckmäßig.

Die Deckel der Einzelreaktoren weisen bevorzugt zusätzliche Druckminderleitungen auf, um in den Reaktionskammern einen verminderten Druck einzustellen.

Für unterschiedliche zu bearbeitende Aufgabenstellungen und der damit verbundenen apparativen Veränderung der Einzelreaktoren bietet eine Anpassung bzw. Modifikation an die jeweilige Aufgabenstellung über den Wechsel verschiedener Ausführungen des Deckels besondere Vorteile, da nur ein Bauteil verändert oder variiert werden muss. Die in verschiedenen Modulen einsetzbaren Reaktordeckel erschließen unterschiedliche betriebsnahe Prozessanforderungen hinsichtlich der durchzuführenden Reaktionen, so dass beim Reaktordeckel von einem prozess- oder reaktionsabhängigen Austauschmodul gesprochen werden kann. Deshalb ist eine Vielzahl unterschiedlich gestalteter Deckel für den wirtschaftlichen Betrieb eines Parallelreaktor-Systems wünschenswert. Im folgenden werden verschiedene Deckelvariationen für spezifische Aufgabenstellungen aufgeführt, wobei die beschriebenen Merkmale der einzelnen Deckelausführung auch zusammengefasst und in Kombination auf einem einzelnen Deckel verwirklicht werden können. Der Deckel hat die Aufgabe den Versuchsraum einzugrenzen und abzuschließen. Der Versuchsraum ist ein Hohlraum, gebildet aus dem Hohlraum der druckfesten Kammer und dem Hohlraum des Deckels. Der Versuchsraum kann durch entsprechende Deckelkonstruktion vergrößert oder verkleinert werden. Die Vergrößerung des produktberührten Versuchsraumes des Einzelreaktors ist abhängig von der optimalen Substanzmenge, gebildet aus allen beteiligten Komponenten einer Versuchsrezeptur und einem zusätzlichen Volumen, um eine hydraulische Befüllung des Versuchsraumes sicher zu verhindern. Aus diesem Grund besteht die Möglichkeit durch Hinzunahme eines eingearbeiteten Hohlraums im Deckel den Versuchsraum der druckfesten Kammer um bis zu 50 % und mehr auf einfache Weise zu vergrößern, insbesondere dann, wenn die Substanzen sich in einem Probengefäß befinden, das in den Einzelreaktor eingesetzt werden kann (zweistückige Ausführung). Alle Deckel besitzen vorzugsweise einen konzentrischen abgesetzten äußeren Bereich, auf dem der Verschlussriegel im geschlossenen Zustand liegt und gegebenenfalls bei erhöhtem Innendruck der Kammer die benötigten Dichtkräfte aufbringt. Der Deckel besitzt in einfachster Ausführung keine Öffnungen für eine Substanz-Zuführung oder Ableitung. Diese sind dann an der Kammer angebracht. Dieser einfache Deckel kann jedoch mit einem Thermometerschutzrohr ausgerüstet sein, um über die Innentemperatur den Prozessablauf zu erfassen und zu steuern. Der einfache Deckel hat Vorteile bei Synthesen, bei denen gasförmige Reaktionskomponenten schnell über die Flüssigkeitsoberfläche aufgenommen werden. Prozesse bei denen Reaktionsgase oder temperierte, verdampfte Flüssigkeiten im Reaktionsraum einen Druck aufbauen, können bei konstanten Temperaturen über eine Zuführung an der Kammer sehr gut druckgesteuert werden. Des weiteren kann pro Versuch mindestens einmalig eine gasförmige Reaktionskomponente mit entsprechend hohem Druck über die Zuleitung der druckfesten Kammer aufgebracht werden. Der während der Reaktion fallende bzw. sich verändernde Druck kann mit einem Drucksensor, der an der Ableitungsöffnung der druckfesten Kammer installiert ist, überwacht werden und gibt Informationen über den zeitlichen Verlauf der Reaktion.

Die Deckel besitzen in einer bevorzugten Variante mindestens eine Leitung für die Zuführung oder Ableitung von Reaktionskomponenten unter z.B. Inertbedingungen. Insbesondere sind im Deckel mindestens 5 Öffnungen vorgesehen, um möglichst einfach und schnell unterschiedliche Versuchsanforderungen der verschiedenen Synthesen durch separate, zuführende oder ableitende Substanzanschlüsse automatisiert realisieren zu können. In die zuführenden oder abführenden Öffnungen können im einfachsten Fall, Kapillaren eingeschweißt sein, um mögliche Leckagestellen zu vermeiden. Bei dickerwandigen, druckfesten Deckeln können Gewindeanschlüsse für eine einfache Adaption verschiedener apparativer Bauteile oder unterschiedlicher Sensoren vorgesehen sein. Die zuführenden und oder abführenden Anschlussleitungen bieten die Möglichkeit der Kopplung mit den externen und zugehörenden Vorsorgungseinrichtungen z.B. Verteilereinheiten und der Kontrolleinheit des Parallelreaktorsystems. Des weiteren bietet sich die Möglichkeit mehrere Einzelreaktoren in Reihe zu verbinden, um weitere Folge-Syntheseschritte direkt hintereinander ablaufen zu lassen. Einzelreaktoren die in Reihe hintereinander angeschlossen sind, bieten zusätzlich die Möglichkeit der kontinuierlichen Kaskaden-Fahrweise.

Eine weitere bevorzugte Variante eines Deckels ist die Implementierung eines Rührers. Diese Variante bietet die Möglichkeit, eine mittige Öffnung des Deckels zu nutzen und einen Rührer zur intensiven Vermischung der eingesetzten Produkte zu adaptieren. Der Rührer ist z.B. über eine Kupplung mit einem Antriebssystem bzw. direkt mit einem Motor verbunden. Zwischen Deckelanschlussöffnung und Kupplung ist ein Bauteil (Gehäuse) zwischengeschaltet zur Aufnahme der Rührwellenabdichtung und wenn erforderlich einer Rührwellenlagerung, so dass ein Betrieb unter erhöhtem Druck möglich ist. Die Kupplung kann eine kraftschlüssige oder auch eine Magnetkupplung sein. Eine weitere Alternative ist der Einbau eines Magnetrührantriebes. Durch eine Verbindung des Motorantriebs an die Kontrolleinheit kann über die Stromaufnahme bzw. Strömänderung zu jeder Zeit das wirksame Motordrehmoment und damit die Rührleistung ermittelt werden. Diese besondere Variante der Deckelausführung ist besonders geeignet für Reaktionsuntersuchungen bei sich verändernder und höherer Viskosität. Der Rührantrieb in Verbindung mit z.B. einer Magnetkupplung erhöht die Dichtigkeit des Reaktionsbehälters, und hat aufgrund dessen Vorteile bei Versuchsdurchführungen mit besonders toxischen Substanzen. Herrschen gleichzeitig hohe Drücke (>200 bar) im Reaktionsraum, so bietet ein außenliegender Magnetrührerantrieb Vorteile hinsichtlich Dichtheit und übertragener Rührleistung. Reaktionsuntersuchungen im höherviskosen Bereich mit einer Viskosität größer 5000 mPas benötigen eine hohe Rührerleistung um eine homogene Vermischung im Kammermodul zu gewährleisten. Hohe Rührerleistungen bei hohen Viskositäten und gleichzeitig hohen Drücken und Temperaturen werden z.B. mit außenliegender Magnetkupplung realisiert. Hierbei wirkt der Temperatureinfluss auf die Leistungsfähigkeit der Magnete, es wird ein ausreichender Abstand vom Magnet zur heißen Deckeloberfläche vorgesehen um, die Rührleistung sicher zu stellen. Des weiteren besteht bei außenliegender Magnetkupplung kaum eine Begrenzung hinsichtlich der Kupplungs-Baugröße, so dass eine hohe Rührleistung realisiert werden kann. Eine weitere Öffnung wird z.B. benutzt für die Platzierung eines Thermometerschutzrohres welches in die druckfeste Kammer reicht und die Aufnahme des Temperatursensors ermöglicht. Ein Thermoelement ist in dieser besonderen Ausführung über eine Sensorplatine mit der Kontrolleinheit verbunden, so dass eine kontrollierte Temperierung der Versuchsdurchführung mit einem Innentemperatursensor möglich ist. Der Temperatursensor kann mit dem Deckel fest verbunden sein, so dass ein Thermometerschutzrohr entfällt, um eine zeitliche Verzögerung der realen Substanztemperatur während eines Versuchs zu vermeiden.

Eine weitere bevorzugte Ausführung eines Deckels besitzt einen zusätzlichen Hohlwellenrührer für Begasungen im Reaktionsraum, gegebenenfalls für die Gaseinleitung unter dem Flüssigkeitsspiegel der eingesetzten Substanzmengen in der Kammer.

Der Hohlwellenrührer besitzt am Wellenkopf eine Rührwellenöffnung und unterhalb sowie oberhalb dieser Rührwellenöffnung befindet sich eine zusätzliche Dichtung um zum Reaktor und zur Kupplung das einzuleitende Gas oder auch eine einzubringende Flüssigkeit abzudichten. Der Rührwellenkopf und die beiden zusätzlichen Rührwellendichtungen sitzen in einem separaten kleinen Gehäuse, oder sind integriert in einer sogenannten Wellenabdichtung mit Sperrdruckring. Dadurch ist es möglich, eine unter Druck stehende gasförmige oder flüssige Komponente bei laufendem Rührwerk, durch die Hohlwelle des Rührers, direkt in das Reaktionsgemisch im Einzelreaktors zu leiten und unmittelbar intensiv zu mischen. Ein weiterer Vorteil kann dadurch erzielt werden, dass eine gasförmige oder flüssige Komponente als Schleppmittel direkt in eine intensiv vermischte Reaktionsschmelze geleitet wird. In beiden Anwendungen und auch in besonders kleinen Versuchsansätzen mit kleinem Volumen werden große Oberflächen und gute Stoffübergänge erzeugt die verfahrenstechnisch vorteilhaft sind.

Bevorzugt ist auch eine Ausführung eines Deckels, der eine doppelwandige Rührerwelle besitzt, an der am unteren Wellenende ein in die Substanz eintauchendes Rührblatt angebracht ist, wobei mittels Wärmeleitung zwischen Rührwelle und Rührblatt eine direkte und unterstützende Temperierung des Reaktionsgemisches im Reaktionsraum des Einzelbehälters erfolgt. Insbesondere kann es bei der Durchführung von exothermen Reaktionen mit extrem hohen Wärmeleistungen erforderlich sein, neben der erfindungsgemäßen zugehörigen Kühleinheit eine zusätzliche platzsparende Kühlmöglichkeit im Reaktionsraum (Kammer) des Einzelreaktors vorzusehen. Der temperierbare Wellenrührer hat zusätzlich den Vorteil, dass die Wärmeübertragungsleistung bei hohen Drehzahlen des Rührers durch die damit einhergehende Erhöhung der Re-Zahlen begünstigt wird und dass durch die Bauform die Wärmeübertragungswiderstände, hinsichtlich der Wanddicke, gering sind. Die Temperierung kann elektrisch oder mit Wärmeträgerölen erfolgen oder im speziellen Fall erfolgt eine Kühlung durch Sole (<20°C), Kühlwasser oder Luft. Für die Zuführung der flüssigen Temperiermittel ist vorzugsweise außerhalb des Deckels am Einzelbehälter eine besondere Anschlusseinheit vorgesehen, die nach dem Rotor - Stator - Prinzip funktioniert. Die Rührergeometrie kann entsprechend der verfahrenstechnischen Aufgabe optimiert und angepasst werden.

Bevorzugt ist weiterhin eine Variante eines Deckels, der einen innenliegendem Kondensator mit außenliegenden Kühlanschlüssen aufweist, wobei der Kühler entweder fest mit dem Deckel verbunden oder anschraubbar ist. Der innenliegende Kühler hat Vorteile hinsichtlich mehrerer Verfahrensanforderungen. Insbesondere bei der Reaktionsführung um den Siedepunkt, einer an der Synthese beteiligten Komponente, kann während einer exothermen Reaktion die verdampfenden Reaktionskomponente über eine Siedekühlung der Synthese wieder zurückgeführt werden und gleichzeitig können große Wärmemengen aus der Synthese abgeführt werden. Des weiteren ist es möglich entstehende gasförmige Komponenten über den innenliegenden Kühler kontinuierlich aus dem Reaktionsprozess zu schleusen und gegebenenfalls mitgeschleppte, dampfförmige Anteile von an der Synthese beteiligten Reaktionskomponenten aus dem Abgasstrom zu kondensieren. Der innenliegende Kondensator besitzt vorzugsweise zusätzliche Kühlrippen, der in besonderen Ausführungen bis kurz über dem flüssigen Syntheseeinsatzvolumen und in ganz speziellen Fällen sogar in das Einsatzvolumen des Reaktionsbehälter taucht. Am unteren Ende des innenliegenden Kühlers können am äußeren Zylinder Kühlrippen sitzen um eine möglichst große Kühlfläche für den Kondensations- oder Kühlprozess auszubilden.

Ein Deckel kann auch insbesondere mit außenliegendem Kondensator versehen sein. Der Vorteil des außenliegenden Kondensators oder Kühlers besteht im größeren Platzangebot außerhalb der Reaktorkammer. Dadurch kann die Kühlfläche für eine Siedekühlung oder das Auskondensieren eines Abgasstromes beliebig groß ausgelegt werden. Verlangt die Versuchsanforderung einen Deckel mit Rühreinrichtung kann der außenliegende Kondensator auch seitlich an einer vergrößerten, zuführenden oder ableitenden Öffnung im Deckel oder an der Kammer angebracht werden. Eine spezielle Variante eines solchen Deckels besteht darin, dass der außenliegende Kühler durch eine thermische Trennkolonne ausgetauscht ist.

Bevorzugt ist ebenfalls eine Deckelvariante mit einer Dosiervorrichtung für flüssige Substanzen oder verflüssigte Gase in Verbindung mit einem sogenannten Ringspaltdosierer, der einen bewegbaren Kolben mit eingebrachter Nut, die den beweglichen Ringspalt bildet, besitzt. In der Füllstellung des beweglicher Ringspaltes, im ausgefahrenen Zustand des Kolbens, befindet sich, auf gleicher Ebene des beweglichen Ringspaltes, im Gehäuse der Dosiervorrichtung der statische Teil des konzentrischen Ringspaltes. Der statische Ringspalt kann die Funktion eines Substanz zuführenden Bypasses wahrnehmen, wenn ein kontinuierliches Durchströmen des Ringspaltes prozesstechnisch erforderlich ist. Der bewegbare Kolben ist z.B. mit mindestens drei Dichtungen ausgestattet, um die Beladestelle zur Umgebung und zum Prozessraum abzudichten. Dieser spezielle besondere Deckel mit Dosiervorrichtung bietet die Möglichkeit, reproduzierbar und volumetrisch kleinste flüssige Substanzmengen mit einem Volumen < 5 ml, bevorzugt Volumen < 1ml, besonders bevorzugt Volumina unter Tropfengröße < 0,1 ml, in einen unter Druck stehenden temperierten Raum des Einzelreaktors zu dosieren. Für Synthesen, bei denen sich im Gasraum des Reaktors eine oder mehrere dampfförmige Reaktionskomponenten befinden, und die bestimmend sind für den Reaktionsverlauf und des Reaktorinnendrucks, ist es besonders vorteilhaft den Deckel mit Dosiervorrichtung als Ringspaltdosierer einzusetzen. Der Ringspaltdosierer arbeitet hubweise, wobei die Taktfrequenz der Hübe wahlweise vorgegeben oder über den Reaktorinnendruck oder den Syntheseverlauf gesteuert werden kann. Zur Steuerung dient ein Prozessleitsystem bzw. anderer Steuereinheiten. Über die erreichte maximale Anzahl von Dosierhüben kann ein Prozess abgebrochen werden. Sobald der Kolben mit dynamischem Ringspalt mit Substanz gefüllt ist und von der Beladeposition in die abgebende Position, im ausgefahrenen Zustand, gefahren ist und der gefüllte Ringspalt im Reaktionsraum des Einzelbehälter ist, kann die aufgenommene zu dosierende Substanzmenge abgegeben und dem jeweiligen Prozess zugeführt werden. Das erfolgt bei größeren dosierten Volumen bevorzugt durch Abtropfen und bei kleinsten Volumina, unter spezifischem Tropfenvolumen, insbesondere durch Verdampfung im temperierten Gasraum des Einzelreaktors. Der Deckel mit Dosiervorrichtung in Form eines Ringspaltdosierers kann auch zur Probenentnahme von kleinsten Substanzmengen eingesetzt werden, wenn der Hubweg des Kolbens mit statischen Ringspalt entsprechend vergrößert wird. Es liegt nahe, dass die Dosiervorrichtung auch als Einzelkomponente als Probennehmer direkt am Boden der druckfesten Kammer positioniert werden kann. Der Antrieb des Kolbens kann elektrisch, pneumatisch oder auch hydraulisch erfolgen. Der Einsatz des Ringspaltdosierers als Probennehmer erfolgt in umgekehrter Reihenfolge. Der Kolben mit dem Ringspalt bewegt sich in die Reaktionsflüssigkeit, wird dort hydraulisch geflutet und anschliessend in die Füllposition des Ringspaltes gefahren. Dort kann die entnommene Probenmenge mit einer Trägerflüssigkeit oder einem Trägergas, welches über den statischen Teil des Ringspaltes zugeleitet wird, verdrängt und zu einem Analysegerät transportiert werden.

Eine bevorzugte weitere Bauform des Deckels ist mit einer Probenentnahme-Vorrichtung und innenliegendem Steigrohr versehen. Die Probenentnahme-Vorrichtung besteht aus einer Kombination von zwei gesteuerten Dreiwege-Ventilen oder Kugelhähnen, zwei gesteuerten Zweiwege-Ventilen und einem vertikal stehenden Rückschlagventil mit Schwimmerkörper, die in einer festgelegten Reihenfolge, gegebenenfalls automatisiert, geschaltet werden müssen. Die automatische Probenentnahme während eines Prozesses ist notwendig, um den Reaktionsfortschritt während der Synthesezeit mittels Analytik zu verfolgen, zu kontrollieren und zu steuern. Die Probenentnahme-Vorrichtung ist z.B. an einem Steigrohr angeschlossen, welches in die druckfeste Kammer bis in das gerührte Reaktionsgemisch des Einzelbehälters eintaucht. Das in den Behälter hineinragende Steigrohrende ist am unteren Ende offen, während am anderen Ende des Steigrohres, außerhalb des Reaktorraumes, die Ventilkombination angeschlossen ist. Für eine gesteuerte Probenentnahme sind mehrere hintereinander ablaufende Schaltungsvorgänge der Ventile notwendig.

In einer weiteren besonderen Ausführungsform weist der Deckel eine Heizvorrichtung auf.

Eine bevorzugte Variante der erfindungsgemäßen Vorrichtung ist dadurch gekennzeichnet, dass die Heizeinrichtung und/oder die Kühleinrichtung der Kammern von den Kammern separierbar ausgebildet sind.

Zur Temperierung der druckfesten Kammer sind z.B. eine Heizeinrichtung und eine Kühleinrichtung gleichzeitig vorgesehen.

Je nach Prozessanforderung ist es vorteilhaft zu wählen, welche Einrichtung als erstes die druckfeste Kammer umschließt. Bei zu untersuchenden endothermen Vorgängen ist es vorteilhaft die Heizeinrichtung mit direktem Kontakt zur druckfesten Kammer vorzusehen, damit eine zeitliche Verzögerung des Heizvorgangs reduziert wird.

Bei zu untersuchenden Vorgängen, die exothermen Charakter zeigen, kann die zeitliche Verzögerung bis zum Einsetzen der Energieabfuhr verkürzt werden, in dem die Kühleinrichtung direkten Kontakt zur druckfesten Kammer hat.

Die Energiezufuhr mittels Heizeinrichtung wird vorzugsweise elektrisch betrieben. Die Heizeinrichtung ist z.B. ein einseitig geschlossener Hohlzylinder, dessen innere Kontur der äußeren, zylindrischen Kontur der druckfesten Kammer angepasst ist. Am äußeren Umfang besitzt die Heizeinrichtung z.B. eine spiralförmig verlaufende Nut zur Aufnahme eines elektrisch Widerstanddrahtes, der mit mittlerer Spannung (220V), vorzugsweise jedoch mit <100V besonders bevorzugt mit <60V elektrischer Spannung betrieben wird. Des weiteren umschließt der elektrische Heizdraht den gesamten Zylinder der Heizeinrichtung.

Um einen hohen Temperaturgradient zwischen druckfester Kammer und Heizeinrichtung und eine einfache Anschlussmöglichkeit der elektrischen Beheizung zu ermöglichen, ist eine besondere Ausführungsform ausgewählt, bei der ein spiralförmig umlaufender Kanal zweizügig ausgebildet und an die Form des Heizdrahtes angepasst ist, so dass der Heizdraht einen optimalen metallischen Kontakt zum Träger hat. Des weiteren besteht die Heizeinrichtung aus insbesondere einem Werkstoff mit höherer Wärmeleitfähigkeit als das Material der drucktragenden Kammer. Der Quotient gebildet aus der Wärmeleitfähigkeit der Heizeinrichtung und der druckfesten Kammer ist insbesondere größer als 1, bevorzugt größer 5 und besonders bevorzugt größer 10. Durch die Kombination von elektrischer Heizung und hoher Wärmeleitfähigkeit des Werkstoffes der Heizeinrichtung ist für die zu beheizende Kammer ein maximaler Heizgradient realisierbar, der kurze Aufheizzeiten für den zu untersuchenden Prozess garantiert. Bevorzugte Werkstoffe für die Heizeinrichtung sind Kupfer, Messing, Aluminium oder Edelmetalle mit hoher Wärmeleitfähigkeit. In besonderen Ausführungsformen kann die Heizeinrichtung Bestandteil der druckfesten Kammer und einstückig ausgebildet sein.

Die Kühleinrichtung hat beispielsweise die Form eines Rohres, dessen Wandung Hohlräume für die Durchströmung eines Temperiermediums besitzt. Die Kühleinrichtung umschließt die Heizeinrichtung im zylindrischen Bereich in einer bevorzugten Ausführung vollständig, so dass ein enger Kontakt mit gutem Wärmeübergang durch die Heizeinrichtung und druckfester Kammer besteht. Der Werkstoff der Kühleinrichtung ist mindestens so gut wärmeleitend wie der Werkstoff der Heizeinrichtung. In einer weiteren, bevorzugten Ausführungsform ist der Vorteil der getrennten Heiz- und Kühleinrichtung sichtbar, wenn prozessbedingt die Kühleinrichtung direkt die druckfeste Reaktionskammer umschließt und die Heizeinrichtung die Kühleinrichtung umschließt. Dies kann bei extrem exothermen Prozessen von Vorteil sein, um die Abführung der Reaktionswärme weiter zu verbessern. Die Energiezufuhr über die Heizeinrichtung kann bei dieser besonderen Ausführungsform schnell unterbrochen werden. Die Wandung der Kühleinrichtung ist hierbei hohl, so dass ein flüssiges oder gasförmiges Kühlmedium durch die Kühleinrichtung strömen kann. Zur Verbesserung der Temperierung ist die Wärmeübertragungsfläche im Wandungshohlraum der Kühleinrichtung durch Rippen bzw. bevorzugt durch einen spiralförmig verlaufenden Kanal oder besonders bevorzugt durch einen mehrzügigen, spiralförmig verlaufenden Kanal ausgebildet. Bei der Form mit spiralförmig verlaufenden, mehrzügigen Kühlkanälen kann die Kühleinrichtung simultan mit Luft und/oder Wasser gleichzeitig betrieben werden.

Die Heiz-/Kühleinrichtung bietet die Möglichkeit sehr hohe Aufheizraten und nach Versuchsende hohe Abkühlraten zu realisieren, so dass der Reaktionsverlauf nur geringfügig bzw. gar nicht beeinträchtigt wird. Diesen Vorteil bieten die bekannten Vorrichtungen nicht. Dieser Effekt wird bei nicht optimaler Gestaltung des Temperiersystems, insbesondere bei einer parallelisierten Miniaturisierung, so gravierend, dass bei sehr kurzen Reaktionszeiten keine aussagekräftigen chemischen und verfahrenstechnischen Ergebnisse aus dem Versuch abgeleitet werden können. Die gemittelte Temperaturänderung (Heiz- bzw. Kühlrate) des Heiz-/Kühlsystems beträgt insbesondere mindestens 5°C/Minute, bevorzugt mindestens 10°C/Minute und besonders bevorzugt mindestens 15°C/Minute.

Es besteht aber auch die Möglichkeit einer Temperierung mittels flüssigem Stickstoff oder die Anschlussmöglichkeit eines Kryostaten, um mit hohen Temperaturdifferenzen Wärmemengen abzuführen. Bei einer besonderen Ausführungsform kann die Kühleinrichtung Bestandteil der Reaktionskammer sein. Das führt zu etwas geringeren Wärmeübertragungswiderständen und verbessert die systemspezifische Kühlleistung zu Lasten der Flexibilität.

In einer anderen bevorzugten Bauform der Experimentiervorrichtung sind die Probengefäße mit den Kammern einstückig ausgebildet.

Besondere Vorteile bei der Behandlung kleiner Versuchsmengen liefert eine besonders bevorzugte Vorrichtung, bei der die Böden der Probengefäße im wesentlichen planar sind und gegenüber der Horizontalen um einen Winkel α von 5 bis 60° angestellt sind.

Dabei wird die Aufnahmeeinheit, in der die Einzelreaktoren positioniert sind, durch Scharniere oder Drehgelenke ergänzt, so dass sich manuell ein gewünschter Kipp-Winkel einstellen lässt. Durch diese Maßnahme können in den Einzelreaktoren Versuche mit einer Gesamtansatzmenge durchgeführt werden, die kleiner ist als 1,5 ml ohne dabei die technische Ausrüstung des Reaktorsystems zu ändern.

Zur Nachbildung von Verfahren mit mehreren konsekutiven Verfahrensschritten ist es besonders vorteilhaft zwei oder mehr Einzelreaktoren über ihre Stoffzuleitungen und Ableitungen in Serie miteinander zu verbinden.

In einer besonders bevorzugten Variante der vorgenannten Anordnung sind jeweils zwei benachbarte in Serie miteinander verbundene Einzelreaktoren auf unterschiedlicher Höhe angeordnet.

Alternativ oder zusätzlich können jeweils zwei benachbarte in Serie miteinander verbundene Einzelreaktoren unter verschiedenem Druck betrieben werden und in die Verbindungsleitung zwischen den Einzelreaktoren ein Förderaggregat geschaltet sein.

Die Serienschaltung der Einzelreaktoren erlaubt es insbesondere die verfahrenstechnischen Fragestellungen bei der parallelisierten Synthese von temperatursensiblen Substanzen zu untersuchen und das Syntheseergebnis hinsichtlich Selektivität zu verbessern. Dabei kann es auch vorteilhaft sein, wenn ein nachgeschalteter Einzelraktor ein grösseres Apparatevolumen als der vorgeschaltete besitzt. Des weiteren besteht die Möglichkeit nach definierter Synthesezeit die folgende Abkühlphase bzw. Abkühlzeit des Reaktionsgemisches vollkommen auszuschalten, in dem die Substanzübertragung in den nachgeschalteten Einzelreaktor in vorgelegter und gekühlter neutraler Flüssigkeit erfolgt.

Zur vereinfachten Zuführung und Abführung von Prozessstoffen sind die Einzelreaktoren mit einer Stoffverteilereinheit verbunden.

Stoff-Verteilereinheiten werden benötigt, um eine automatisierte Untersuchung von Synthesevorgängen im kleinen Maßstab, nach chemischen, physikalischen oder verfahrenstechnischen Gesichtspunkten zu ermöglichen. Aufgrund der häufig sehr komplexen Apparaturen für eine betriebsnahe schnelle Untersuchung und bei wechselnden Aufgabenstellungen ist eine kompakte Ausführung vorteilhaft und erforderlich. Werden derartige Untersuchungen bei hohem Druck (bis 400 bar) und hohen Temperaturen durchgeführt, so ist das Erreichen von genauen, reproduzierbaren Messergebnissen besonders schwierig, weil in der komplexen parallelisierten Versuchsapparatur noch viele Leckagemöglichkeiten vorhanden sein können. Der Fachmann weiß, dass jede konventionelle lösbare Verbindung von Stoffleitungen eine Leckagerate besitzt und die jeweilige Leckagemenge multipliziert mit einer hohen Stückzahl lösbarer unter Druck stehender Verbindungen dazu führt, dass Versuchsergebnisse nicht übereinstimmen können und keine reproduzierbaren Messergebnisse erzielt werden. Dies macht sich insbesondere bei den typischerweise verwendeten, sehr geringen Substanzvolumina (10 ml) bemerkbar und kann zu unbrauchbaren Versuchsergebnisse führen. Durch die bevorzugt einzusetzende Stoff-Verteilereinheit kann die Anzahl der lösbaren Verbindungen bis auf die eigentliche Verbindungsstelle zum Einzelreaktor reduziert werden. Eine Stoff-Verteilereinheit ist bevorzugt ein aus mindestens drei Lamellen (z.B. Metallblechen) aufgebauter Stapel, wobei die Lamellen Langlöcher oder kreisrunde Öffnungen haben. In dem Stapel werden z.B. durch mehrere Langlöcher Kanäle gebildet. Die nebeneinander liegenden Kanäle sind in der Horizontalen einer mittleren Lamelle nicht mit einander verbunden. Die mittlere Einzellamelle besitzt auf der Ober- und Unterseite eine Abdecklamelle, wobei an der Ober- und oder Unterseite der Abdecklamelle nach Bedarf kreisrunde Öffnungen für die Zu- und Ableitung der Stoffe eingebracht sind. Die Stoff-Verteilereinheit besteht insbesondere aus mindestens zwei unterschiedlich dicken Lamellen, wobei die mittige Lamelle mit ihren Schlitzen als Kanäle dicker ist als die beiden abdeckenden Lamellen mit den zuleitenden und oder ableitenden Öffnungen. Der horizontale Abstand der Schlitze der mittleren Lamelle ist so bemessen, dass durch eine vollständige flächige Verlötung, der zwei Abdecklamellen mit der mittigen, geschlitzten Lamelle, mindestens ein abgeschlossener druckfester zuführender und oder ableitender Kanal für Prozessstoffe entsteht. Der entstehende Lamellenstapel kann als Stoff-Verteilereinheit für den chemischen Prozess aber auch als Verteilungseinheit für Temperiermedien genutzt werden. Von den verteilenden Kanälen zweigen eine Vielzahl kleinerer ableitender Öffnungen ab zur Versorgung der Einzelreaktoren. Der zuführende Strömungsquerschnitt der Öffnung ist so groß wie der Strömungsquerschnitt des verteilenden Schlitzes in der mittleren Lamelle. Die Strömungsquerschnitte der ableitenden Öffnungen sind um ein Vielfaches kleiner als die der zuleitenden. Eine bevorzugte Ausführungsform der Stoff-Verteilereinheit ist durch direkte Kopplung eines steuerbaren Ventils mit der ableitenden Öffnung eines verteilenden Lamellen-Kanals verwirklicht. Dabei können steuerbare Ventile oder Kugelhähne direkt in die Abdecklamelle eingeschraubt und gedichtet bzw. auf diese eingeschweißt werden.

Die Stoff-Verteilereinheit kann aus verschiedenen Werkstoffen bestehen, so dass Temperatur, Druck- und Korrosionseinflüsse ausreichend berücksichtigt sind. Vorzugsweise ist die Stoff-Verteilereinheit so hergestellt, dass sie eine massive Einheit bildet, in besonderen Ausführungen ist die Einheit aus verschraubten Lamellen zusammengefügt, so dass die eingebrachten Kanäle untereinander mit elastischen Dichtungen von einander getrennt und gedichtet sind.

Prinzipiell werden zwei besonders bevorzugte Ausführungsformen der Stoff-Verteilereinheit unterschieden. Bei einer besonders kompakten Ausführungsform befinden sich die verteilenden Kanäle in mehreren Ebenen übereinander und sind gekennzeichnet durch eine gerade Reihe von Austrittsöffnungen, bei der vorher beschriebenen Ausführungsform, in flacher Bauweise, befinden sich die Verteilungskanäle parallel nebeneinander in einer Ebene und die abgebenden Stoff Austrittsöffnungen sind auf der Vorder- und Rückseite des Stoff-Verteilers ungleichmässig verteilt. Der parallele Abstand der Verteilungskanäle in horizontaler Lage sollte aus drucktechnischer Sicht mindestens eine Kanalbreite betragen, damit insbesondere wirtschaftliche Lötverfahren oder schweißtechnische Verbindungsverfahren, wie das Laser- oder Elektro-Beam-Verfahren, zur Verbindung der Lamellen benutzt werden können.

Die Stoff-Verteilereinheit in kompakter Bauweise besteht z.B. aus mindestens 5 Platten oder Blechen, wobei die Bleche unterschiedlich strukturiert sind. Unter Strukturierung sind unterschiedlich große, kreisrunde Öffnungen (Bohrungen) oder lange und kurze Schlitze (Langlöcher) zu verstehen. Werden die Bleche (Lamellen) übereinander positioniert und die Kontaktflächen der Bleche untereinander z.B. ganzflächig zu einem Blechpaket unlösbar verbunden, so entstehen durch die eingebrachten Strukturen, horizontal und vertikal verlaufende rechteckige Strömungskanäle (Hohlräume) mit unterschiedlichen Strömungsquerschnitten, die sich in verschiedenen Abschnitten, jedoch in verschiedenen zueinander getrennten Ebenen, im Winkel von 90 Grad schneiden. Die Strömungsquerschnitte werden, beginnend an der Haupt-Eintrittstelle des jeweiligen Verteilungskanals bis zur Abgabestelle oder bis zur Austrittsstelle, an der sich ein spezielles steuerbares Plattenventil befindet, immer kleiner. Dadurch ist in der Stoff-Verteilereinheit eine gleichmäßige Verteilung bis zum abgebenden Ventil der flüssigen oder gasförmigen Medien gewährleistet.

An der Haupteinspeisungsstelle in die Stoffverteilereinheit können Hauptleitungen für verschiedene gasförmige oder flüssige Energieträger wie Wasser, Luft oder Kühlsole sowie gasförmige oder flüssige Reaktionssubstanzen angeschlossen werden. Eine Dimensionierung der Strömungsquerschnitte erfolgt durch geeignete Wahl der Blechdicke und durch die Festlegung der eingebrachten Flächenstrukturen.

Zur vereinfachten Versuchsdurchführung bei parallelen Reaktionen wurde eine modifizierte bevorzugte Vorrichtung entwickelt, bei der die Stoffzuleitungen und Stoffableitungen und gegebenenfalls Druckminderleitungen (Vakuumleitung) mit einer der oben beschriebenen Stoffverteilereinheit verbunden sind. Dadurch werden die Zuleitungen, Ableitungen und gegebenenfalls Druckminderleitungen der Einzelreaktoren, wahlweise untereinander und/oder mit einer Hauptstoffzuführungsleitung einer Hauptstoffableitung und gegebenenfalls einer Hauptdruckminderleitung verbunden.

Insbesondere bevorzugt ist ein Stoffverteiler aus mehreren, insbesondere mindestens drei, fest miteinander verbundenen, in Schichten übereinander liegenden Metalllamellen aufgebaut, in die Stoffkanäle und gegebenenfalls Vakuumkanäle sowie Eingänge und Ausgänge eingearbeitet sind.

In einer bevorzugten Ausführungsform des Stoffverteilers besitzt die jeweils oberste und/oder unterste Lamelle Eingänge für die externen Versorgungsleitungen und Ausgänge zu den Reaktorleitungen und die mittlere Lamelle(n) besitzt Verbindungskanäle.

Aufgrund der flächigen Ausbildung des Stoff-Verteilers eignet er sich insbesondere für die weitere Montage von zusätzlich benötigten verfahrenstechnischen apparativen Komponenten wie z. B. Behälter als Vorlage, Fördergeräte, On-Line-Analytik, Interface-Module für die Kopplung von Sensoren und Aktoren mit der Kontrolleinheit. Es wird insbesondere die Kompaktheit und die Anzahl von undichten Verbindungsstellen reduziert, was zu einer hohen Verfügbarkeit der gesamten parallelisierten Versuchsanlage führt. Dieser Aspekt wird bei den bekannten, weniger kompakten Vorrichtungen nicht berücksichtigt. Der flächige Stoff-Verteiler mit adaptierten apparativen Komponenten kann auch als Versorgungseinheit bezeichnet werden und ist in der Regel einen Einzelreaktor zugeordnet.

Die vorzugsweise flächigen Stoff-Verteiler können mit den kompakten Stoff-Verteilern kombiniert werden, so dass ein flächiger Stoff-Verteiler dem Einzelreaktor zugeordnet ist und der kompakte Stoff-Verteiler eine vorgeschaltete Versorgungseinheit darstellt.

Zur Versorgung der insbesondere parallel betriebenen Einzelreaktoren werden kompakte Verteilereinheiten benötigt, damit ein platzsparendes apparatives Parallel-Reaktorsystem aufgebaut werden kann, um die spezifischen Anforderungen hinsichtlich einer chemischen oder betriebsnahen, verfahrenstechnischen Fragestellung untersuchen zu können. Neben Stoff-Verteilereinheiten wird insbesondere auch eine elektrische Verteilereinheit als Interface-Modul eingesetzt. Flächige und kompakte Verteilereinheiten sind insbesondere mit einer Kontrolleinheit verbunden, wobei unter Kontrolleinheit z.B. ein Prozessleitsystem mit Steuer-Software inklusive den dazugehörenden Sensoren zu verstehen ist. Zur Regelung können hierbei die im Prinzip bekannten Regalalgorithmen, z.B. unter Verwendung von Prozessmodellen, verwendet werden. Im besonderen Fall kann in Abstimmung mit den Versuchsanforderungen das Prozessleitsystem durch intelligente Einzelregler ersetzt werden. Die zur Steuerung eines Prozesses benötigten Aktoren können auf der Versorgungseinheit und/oder der Verteilereinheit positioniert sein. Die Verbindung zur Kontrolleinheit erfolgt über elektrische Verbindungsleitungen. Eine Verteilereinheit kann Bestandteil einer Versorgungseinheit sein, wobei die Verteilereinheit mindestens eine Einspeisestelle und eine Vielzahl von zugehörigen Austrittsstellen besitzt um mehrere parallel oder sequentiell verschaltete Einzelreaktoren zu versorgen. Eine Versorgungseinheit ist bevorzugt für ein Vielfaches von zwei Einzelreaktoren vorgesehen.

Die Versorgungseinheit dient der Aufnahme von diversen verfahrenstechnischen Komponenten, um eine Versuchsdurchführung rationell, automatisiert und reproduzierbar durchzuführen. Als verfahrenstechnische Komponenten sind zu nennen, z.B. Vorlagebehälter, Filterapparate, thermische Trenneinheiten, Wärmeaustauscher, Förder- und Dosieraggregaten sowie Sicherheitseinrichtungen, wie Sicherheitsventile und Berstscheiben. Des weiteren können im Bereich der Versorgungseinheit benötigte Sensoren, aber auch Online-Sensoren, installiert werden um möglichst viele unterschiedliche Messwerte aus den Prozessvorgängen im Einzelreaktor zu bekommen.

Verfahrenstechnische Apparatekomponenten benötigen zur Funktionserfüllung verschiedene Versorgungsanschlüsse, z.B. für elektrische Energie, Kühlung durch Wasser oder Luft, Druckbeaufschlagung des Produktraumes mit Inertgas und gegebenenfalls weitere Sicherheitseinrichtungen wie Überdruckventile oder Berstscheiben.

Aus diesem Grunde, um auch von eine kompakte, platzsparende Bauweise zu ermöglichen, können Verteilereinheiten, wie oben beschrieben, auf der Versorgungseinheit montiert sein. Für die Verbindung zur Kontrolleinheit sind elektrische Verteilereinheiten vorgesehen, die es ermöglichen, die zur Steuerung und Regelung benötigten elektrischen Verbindungen der Aktoren und der Sensoren, in Form von Einzelkabeln zusammen zu fassen und mit vieladrigen Kabeln die Verbindung zur Kontrolleinheit herzustellen.

Zur Verwirklichung einer kompakten Bauform der erfindungsgemäßen Vorrichtung wurde noch eine besondere Ausführungsform von steuerbaren Ventilen für Einsatzbereiche bis in hohe Druckbereiche zum automatisierten Betreiben von parallelisierten Synthesen entwickelt. Dies sind sogenannte Plattenventile, die einen integrierten Steuerkopf besitzen.

Diese pneumatisch ansteuerbaren Plattenventile sind z.B. auf jeder Austrittsstelle der kompakten Stoff-Verteilereinheiten angebracht und sind in einer bevorzugten Ausführungsform als in sich lösbarer Stapel aus einzelnen Platten ausgeführt. Die lösbaren Platten des Ventils sind ebenfalls strukturiert, wobei die Strukturierung sich im wesentlichen auf verschieden groß abgesetzte kreisrunde Öffnungen beschränkt. Einige Platten des Ventils haben horizontal verlaufende Kanäle. Diese dienen der Produktzu- oder -abführung. Das Ventil besitzt eine Kopfplatte, in der ein pneumatisch steuerbarer dichtender Zylinder mit angesetzter Ventilspindel eingesetzt ist. Die Platten oder Bleche eines Ventils sind in einer besonderen Ausführungsform untereinander mit auswechselbaren elastischen Dichtungen ausgerüstet, wobei die Dichtungen in der Regel zwei Funktionen übernehmen. Die dichtende Doppelfunktion besteht aus einer dichtenden Wirkung vom Produktraum des Ventils zum steuernden Pneumatikraum am Kopf des Ventils und gleichzeitig zum Abdichten der Platten untereinander sowie nach außen zur Atmosphäre. Der Plattenstabel des Ventils wird mit Schrauben direkt mit der Stoff-Verteilereinheit verbunden. Die Flächen des Pneumatikzylinders, der zur Steuerung, d.h. zur Auf- oder Abbewegung der Ventilspindel bzw. zum Öffnen und Schließen des Ventils dient, sind mindestens um den Faktor 10 größer, als die druckbeaufschlagte Wirkfläche der medienberührten Ventilspindel, daraus resultiert ein Flächenwirkdruck-Verhältnis. Bei der Schließbewegung des Pneumatikzylinders mit Ventilspindel wird das untere Ende der Ventilspindel in eine elastische Dichtung gedrückt, so dass der verlängerte Austrittskanal der Stoff-Verteilereinheit verschlossen werden kann und der Stoff-Durchflussweg unterbrochen ist.

In einer bevorzugten Ausführungsform beträgt ist das Flächenwirkdruck-Verhältnis >10 und in einer weiteren besonders bevorzugten Ausführung ist das Flächenwirkdruck-Verhältnis >50.

Damit bei einem Ausfall der Druckluft das Ventil selbsttätig in den gewünschten sicheren Zustand schaltet, wird in einer besonderen Ausführungsform unter dem Zylinder eine platzsparende Tellerfeder angebracht. Das Ventil kann aufgrund des lamellaren Plattenaufbaus leicht modifiziert werden, so dass es in anderen Ausführungsformen als handbetätigtes-, hydraulisch gesteuertes oder elektromagnetisch gesteuertes Ventil ausgeführt werden kann. Die Stoff-Verteilereinheit mit den benötigten Ventilen ist um ein Vielfaches der Anzahl der Haupt-Kanäle erweiterbar. Der Einsatzbereich hinsichtlich Temperatur und Druck entspricht den hohen Anforderungen der parallelisierten Einzelreaktoren.

Die verkleinerte Ausführung des Plattenventils mit integriertem ansteuerbaren Kopf, hat aufgrund der kleinen Steuerlufträume sehr geringe Ansprechzeiten, so dass extrem kleine Schaltzeiten realisiert werden können.

Eine besonders bevorzugte Bauform der erfindungsgemäßen Vorrichtung ist folglich dadurch gekennzeichnet, dass die Ausgänge des Stoffverteilers mit den Zuleitungen oder den Ableitungen der Einzelreaktoren über schaltbare oder regelbare Ventile verbunden sind.

Die Ventile sind hierbei insbesondere mit dem Stoffverteiler direkt verbunden.

Bevorzugt sind die Ventile pneumatisch steuerbar ausgeführt. Insbesondere bevorzugt sind die Ventile selbstsperrend bei Ausfall der pneumatischen Steuerung ausgelegt.

Die oben erwähnte Kontrolleinheit steuert oder regelt zusätzlich zu Temperatur und Druck bevorzugt auch die Drehzahl der Rührvorrichtungen und/oder die Stellung der Ventile.

Zur Verhinderung von Kontaminationen der Kammern der Einzelreaktoren sind in einer besonderen Variante der Vorrichtung die Probengefäße separierbar ausgebildet und sind zusätzlich entweder zwischen dem oberen Rand der Probengefäße und der Kammerwand oder zwischen der Deckelwand und der Oberkante der Probengefäße ein zusätzliches Dichtmittel vorgesehen.

Zur Vermeidung des Berstens von Probengefäßen in vorstehender Ausführungsform sind zwischen dem Reaktionsraum, der vom Probengefäß verschlossen wird, und dem Zwischenraum zwischen den Probengefäßen und der Kammerwand der Einzelreaktoren Druckausgleichskanäle vorgesehen.

Die Kontrolleinheit ist bevorzugt Bestandteil eines Prozessleitsystems und stellt z.B. einen Temperatursensor dar. Außerdem wird die Kontrolleinheit als Drucksensor zusätzlich eingesetzt. Kontrolleinheiten können in ausreichender Anzahl pro Reaktorsystem und parallelisiert eingesetzt werden, wobei die Verbindung zum eigentlichen Prozessleitsystem und einem angeschlossenen Computer mit entsprechender Software zur Regelung und Steuerung der chemischen, physikalischer und verfahrenstechnischen Prozesse über im Prinzip bekannte Platinentechnik erfolgt. Mit konventionellen mehradrigen Flachbandkabeln werden z.B. Kontrolleinheiten und Aktoreinheiten zum Prozessleitsystem verbunden und analoge und digitale Signale ausgetauscht, wobei auch Signalwerte prozessspezifisch zwischenzeitlich mathematisch verarbeitet und dadurch neue Steuersignale bzw. -befehle generiert werden. Digitalsignale werden vorwiegend zur Steuerung von Stellventilen und als Überwachungssignale verwendet. Besonders vorteilhaft ist die Verwendung von mehreren speziellen Platinen, positioniert in unmittelbarer Nähe der verfahrenstechnischen Einheiten, wie z.B. den Parallel-Reaktoren und oder der Versorgungseinheiten. Dadurch können insbesondere Kabelwege sehr kurz gehalten werden, Kontrolleinheiten können bei wechselnder Aufgabenstellung schnell ausgetauscht und die Messgenauigkeit der Sensoren sowie die Reproduzierbarkeit der durchgeführten Untersuchungen wesentlich erhöht werden. Zusätzlich sind durch registrierte analoge Signale Berechnungen möglich, die weitere Aufschlüsse und Erkenntnisse zum ablaufenden Prozess ermöglichen. Ein wichtiges Beispiel zur Berechnung von stoffspezifischen Kenngrößen ist die Viskosität, sie kann direkt aus der Änderung der Stromaufnahme des Motors mit Rührer ermittelt werden. Insbesondere für den Fachmann neu ist, dass selbst bei einfacher Magnetkupplung mit getrenntem innenliegendem Magnetrührer eine Differenz der Stromaufnahme am Motor messbar ist und direkte Rückschlüsse auf die stoffspezifische Viskositätsänderung im Innern des Reaktors während der Synthese möglich sind.

Das Prozessleitsystem kann bei sehr einfachen Anwendungen auch ein Regler bzw. ein Mehrkanalregler sein, wobei wesentliche Prozessinformationen verloren gehen können. Insbesondere bei der miniaturisierten, parallelisierten und betriebsnahen Versuchsdurchführung mit kleinen Substanzeinsätzen unter extremen Bedingungen, wie hohe Drücke und hohe Temperaturen, ist die gute Reproduzierbarkeit eine Grundbedingung, d.h. dass nur wenige bzw. keine Eingriffe durch das Bedienpersonal erfolgen dürfen. Eingriffe durch wechselndes Bedienpersonal führen zu Fehlern und verfälschen die Versuchsergebnisse.

Das führt zu einem Prozessleitsystem mit spezifischen Softwarelösungen in Anlehnung an die erfinderischen apparativen Komponenten. Die neuen Softwarelösungen dienen gleichzeitig der Verstärkung der apparativen Eigenschaften der erfindungsgemäßen Vorrichtung.

Ein weiterer wesentlicher Aspekt in der heutigen Forschung & Entwicklung ist die sichere Prozessführung während der betriebsnahen miniaturisierten und parallelisierten Versuchsdurchführung. Daher wird ein integriertes Sicherheitskonzept, wie oben beschrieben, benötigt, das das Gefahrenpotential reduziert und Personal sowie die Umwelt sichert.

Wechselnde Aufgabenstellungen fordern eine rezepturähnliche Softwarestrukturierung in Abhängigkeit der unterschiedlichen erfindungsgemäßen Vorrichtungsteile. Die einzelnen Softwareeinheiten sind Kombinationen aus Regelfunktionen und/oder Steuerfunktionen. Sie sind z.B. in einer Softwarebibliothek hinterlegt, so dass der Anwender zur Durchführung einer spezifischen Versuchsfahrweise die benötigten Softwareeinheiten aus der Bibliothek entnehmen, sie beliebig miteinander verknüpfen und strukturieren und in Reihe gemäss dem gewünschten Versuchsablauf hintereinander verschalten kann. Des weiteren hat der Anwender die Möglichkeit alle Einzelreaktoren mit den dazugehörenden Apparaten auf der Versorgungseinheit parallel mit gleichen Parametern zu steuern und zu regeln, es besteht aber wahlweise auch die Möglichkeit, alle parallelen Einheiten mit unterschiedlichen Parametern zu steuern und zu betreiben.

Im folgenden sind beispielhaft einige für den Betrieb der erfindungsgemäßen Vorrichtung geeignete Softwareeinheiten aufgezählt und spezifische Merkmale in Verbindung mit oben genannten Systemkomponenten der Reaktoren beschrieben.
1. Systemcheck: Dieses Programm-Modul dient zur Initialisierung des Systems und zur Sicherstellung der Betriebsweise, insofern dass an den Verteilereinheiten alle benötigten Medien über die Versorgungsleitungen anliegen. Alle steuerbaren Ventile der Versorgungseinheit und der Vereilereinheit werden automatisch in die Grundstellung gebracht. Der Anwender wird aufgefordert, verschiedene Kontrollen durchzuführen und zu bestätigen, dass z.B. die Ausgangssubstanzen in die Substanzvorlagen auf der Versorgungseinheit oder auch teilweise in die Einzelreaktoren eingefüllt worden sind. Dann erfolgt die Überprüfung der Medien-Versorgungsleitungen (Druckluft, Stickstoff, Kühlwasser, Sole) die an die Verteilereinheit angeschlossen sind um z.B. eine Temperierung des Einzelreaktors zu sichern. Des weiteren wird eine Abfrage gestartet um ableitende toxische Stoffströme zur Aufbereitung bzw. zu einer Entsorgungseinheit zu leiten. Wenn alle Abfragen und Überprüfungen positiv ausfallen wird das Parallelsystem für die weitere Benutzung freigegeben, so dass die im folgenden beschriebene Softwareeinheit gestartet wird.
2. Dichtigkeitsprüfung: Diese Softwareeinheit dient zur Sicherstellung der Dichtigkeit des Einzelreaktors und der dazugehörenden Komponenten. Die Belüftungsventile der zu prüfenden Einzelreaktoren und aller druckbeaufschlagten Systemkomponenten werden geschlossen, die Stickstoffventile werden geöffnet. Ist der vorgewählte Prüfdruck aufgebaut, oder spätestens nach einer fest hinterlegten bzw. programmierten Zeitkonstanten erreicht, werden die Stickstoffventile geschlossen. Ist ein Prüfdruck nicht erreicht, so kann entschieden werden, ob die Druckprüfung mit diesem Druck fortgesetzt wird, ob die gesamte Prüfung wiederholt wird, oder ob die entsprechende Reaktoreinheit belüftet werden soll und für die weitere parallelisierte Fahrweise gesperrt wird. Sind alle Prüfdrücke erreicht so beginnt die eigentliche Druckprüfung. Die erreichten Anfangsdrücke werden nach Ablauf einer eingestellten Einschwingzeit gespeichert, und aus den Druckabnahmen die Leckagreraten berechnet. Die Anfangsdrücke und die Leckageraten werden angezeigt und gespeichert. Das Ergebnis wird in einer Dialogmaske angezeigt (Anfangsdruck, Enddruck, Abweichung, Status des Reaktors). Wird z.B. festgestellt, dass eine Reaktoreinheit eine zu große Leckagerate besitzt, so kann der Anwender den einzelnen undichten Reaktor für die weitere Fahrweise sperren und mit den anderen individuell steuerbaren parallelen Einheiten das Versuchsprogramm fortfahren. Anhand der hier beschriebenen Vorgehensweise wird der Vorteil individuell ansteuerbarer Einzelreaktoren ersichtlich. Das Parallelreaktorsystem muß beim Vorliegen einer fehlerhaften Einzelreaktion nicht komplett herunter gefahren werden, wodurch eine effiziente parallelisierte Fahrweise möglich ist.
3. Inertisieren 1 (Vakuumfahrweise): Diese Softwareeinheit dient zur Inertisierung der Reaktoreinheit. Die Belüftungsventile der gewählten Einzelreaktoren werden geschlossen und angeschlossenen Vakuumventile werden für die eingestellte Zeit und/oder bis ein definierter Druck erreicht ist geöffnet. Danach schließt das Vakuumventil und ein Inertgasventil öffnet für einen definierten Zeitraum oder bis ein definierter Druck erreicht ist. Danach schließ das Inertgasventil und der Vorgang beginnt mit dem Öffnen des Vakuumventils von Neuem. Dieser Vorgang wird so oft wiederholt, wie dies vom Anwender vorgegeben wurde. Nach dem letzten Durchlauf werden die Belüftungsventile geöffnet und der Druck wird auf den vorgegebenen Endwert eingestellt. Endstellung der Ventile: Alle Ventile geschlossen. Alle Ventilschaltvorgänge laufen im gleichen Takt. Ist die Inertisierung durchgeführt erfolgt wiederum die Weiterschaltung zur nächsten Softwareeinheit.
4. Inertisieren 2 (Verdrängungsverfahren): Diese Softwareeinheit dient zur weiteren Inertisierung der Einzelreaktoren nach dem Verdrängungsprinzip. Die Belüftungsventile der gewählten Einzelreaktoren werden geöffnet und die Stickstoffventile werden für eine eingestellte Zeit, die jedoch wesentlich länger ist als bei der Inertisierung durch Vakuumfahrweise, geöffnet. Es folgt die nächste Softwareeinheit.
5. Inertgas-Vordruck: Diese Softwareeinheit dient zur Einstellung eines definierten Inertgasdrucks im Einzelreaktor. Die Inertgasventile der gewählten Einzelreaktoren werden geöffnet und nach Erreichen eines vom Anwender definierten Drucks geschlossen. Nun startet eine Wartezeit. Nach Ablauf der Wartezeit wird die Operation beendet. Der Einzelreaktor ist betriebsbereit.
6. Grenzwerte: Die Softwareeinheit dient zur Veränderung von Grenzwerten, z.B. Temperatur, Druck, Drehzahl usw., zu bestimmten Zeitpunkten während des Ablaufs und initialisiert bei Verletzung eines eingestellten Grenzwertes ein Programm zur Beendigung des aktuellen Versuchs.
7. Rühren: Diese Softwareeinheit dient zur Vorgabe, Kontrolle und Anzeige der Solldrehzahl der evtl. eingesetzten Rührer. Dabei werden Soll-Drehzahl, Ist-Drehzahl und Drehmoment angezeigt.
8. Temperieren: Diese Softwareeinheit erlaubt die präzise Temperierung der Einzelreaktoren oder auch anderer temperierter Systemkomponenten durch Vorgabe einer Solltemperatur, einer maximal erlaubten Temperaturabweichung Soll-Ist und einer wählbaren Temperatur-Anstiegsrampe, mit der beheizt bzw. gekühlt werden soll. Angezeigt wird die Rampenzeit, die Soll- und die Isttemperatur. Das Temperieren ist eine spezielle Softwareeinheit die eine Synthese mit hoher Reaktionswärme (Exothermie) bei konstanter Innentemperatur ermöglicht. Die erfinderische Kühleinheit (32) besitzt zwei getrennte Kühlkanäle und bietet den parallelen Anschluss zweier Kühlmedien (z.B. Luft, Wasser). Insbesondere bei der Durchführung von speziellen exothermen Reaktionen und der Suche nach optimierten Reaktionsbeschleunigern, ist es erforderlich je nach Aktivität der Beschleuniger eine starke und oder schwächere Kühlung automatisch aufzubringen, so dass die Innentemperatur des Einzelreaktors konstant bleibt. Ein Temperaturcontroler erkennt, dass die Innentemperatur aufgrund der Reaktionswärme steigt, er schaltet nun mittels eines getakteten Ventil über eine definierte Zeit das Kühlmedium mit der niedrigsten Wärmekapazität auf den ersten Kühlkanal der Kühleinheit. Falls in der vorgesehenen Zeit die Innentemperaturabweichung nicht kompensiert ist, wird automatisch das zweite, parallel an der Kühleinheit angeschlossene Ventil, auf den zweiten Kühlkanal der Kühleinheit taktweise zugeschaltet, so dass nun ein Kühlmedium mit großer Wärmekapazität parallel zum ersten Kühlmedium die Innentemperatur der Reaktoreinheit regelt. So kann eine Reaktoreinheit auch bei unbekanntem zeitlicher Reaktionswärmefreisetzung mit konstanter Innentemperatur betrieben werden. Ein zu starkes Unterkühlen und damit Unterbrechen der Reaktion erfolgt nicht.
9. Dosieren: Diese Softwareeinheit dient zur Steuerung einer Dosiereinheit im Reaktordeckel, wobei mindestens zwei Dosiereinheiten bei paralleler Betriebsweise der Einzelreaktoren mit beispielsweise einem Multipositionierventil kombiniert sind. Über das Multipositionierventil wird der entsprechende Einzelreaktor angesteuert, um über eine zentrale Versorgung die Dosiereinheit mit Substanz zu speisen. Die Dosiereinheit kann nur ein definiertes Volumen in den z.B. unter Druck stehenden Einzelreaktor fördern, so dass die gewünschte Dosiermenge über die Hubzahl der Dosiereinrichtung vorgewählt werden kann. Dadurch bieten sich mehrere Möglichkeiten an, die den unterschiedlichen Prozessanforderungen gerecht werden. Die dosierte Substanzmenge kann über eine Voreinstellung der Hubzahl des Dosierkolbens erfolgen und es kann mittels eines Drucksensors und entsprechenden Schaltkontakten eine druckabhängige Steuerung des Einzelreaktors erfolgen. Des weiteren bietet die Softwareeinheit die Möglichkeit neben der druckgesteuerten Dosierung zusätzlich mit der Angabe einer maximalen Hubanzahl den Einzelversuch zu beenden. Um Reaktionsgeschwindigkeiten und den zeitlichen Syntheseablauf einzuschränken und die wesentlichen Reaktionsabschnitte zu untersuchen, ist die Möglichkeit gegeben eine Hubzahl pro Zeiteinheit druckgesteuert vorzugeben. Die entsprechenden Werte werden vorgegeben. Angezeigt werden Druck, Anzahl der Dosierhübe und Laufzeit.
10. Versuch beenden: Die Softwareeinheit wird gestartet nach dem Erreichen von vorgegebenen Kriterien die den Versuch als beendet beschreiben. Jeder eingebundene und betriebene Einzelreaktor wird in einen definierten Endzustand gefahren, das heißt, die Einzelreaktoren werden abgekühlt, der Innendruck definiert entspannt, gegebenenfalls verbleibende toxische Komponenten im Gasraum des Einzelreaktor oder in der Reaktionssubstanz gelöste Anteile können mit Unterdruck entfernt und einer Entsorgung zugeführt werden.
11. Datenübertragung: Diese Softwareeinheit überträgt nach Versuchende alle wichtigen Versuchsparameter und Versuchsergebnisse zu einer übergeordneten Datenbank.
12. Fertigmeldung: Diese Softwareeinheit signalisiert dem Bediener, dass der Versuch in den Einzelreaktoren beendet ist und die Reaktionssubstanzen entnommen werden können.

Weiterer Gegenstand der Erfindung ist ein Verfahren zur Durchführung von parallelen Versuchen an Prozessstoffen unter Verwendung der erfindungsgemäßen Vorrichtung, das dadurch gekennzeichnet ist, dass wenigstens folgende Verfahrensschritte durchgeführt werden:
a) Prüfen der Versorgungsleitungen zu den Einzelreaktoren
b) Eingeben der Versuchsproben in die Probengefäße der Einzelreaktoren,
c) Schließen und Dichtigkeitsprüfung der Einzelreaktoren,
d) gegebenenfalls Inertisieren der Reaktionsräume der Einzelreaktoren mittels Druckverminderung und Einleiten von Inertgas,
e) gegebenenfalls Einstellen eines Inertgasvordrucks,
f) Festlegen der Verfahrensparameter insbesondere Grenzwerte und gegebenenfalls zeitliche Gradienten für den Druck, die Temperatur und gegebenenfalls die Rührgeschwindigkeit der Versuchsstoffe,
g) Regeln der Prozesstemperatur und
h) Durchführen des Versuches unter gegebenenfalls Zudosieren weiterer Versuchsstoffe.

Die erfindungsgemäße Vorrichtung und das Verfahren bieten gegenüber dem Stand der Technik den Vorteil, dass durch ihren modularen Aufbau eine schnelle und wirtschaftliche Anpassung an die aus einer beliebigen Fragestellung resultierenden technischen Anforderungen erfolgen kann. Die Vorrichtung bietet die Möglichkeit, auch unter extremen Versuchsbedingungen bei gleichzeitiger Einhaltung der technischen Regeln zur Gewährung der Sicherheit, Experimente durchzuführen. Ein weiterer Vorteil gegenüber dem bekannten Stand der Technik besteht in der Möglichkeit, bei der Durchführung des Verfahrens jeden Einzelreaktor individuell anzusteuern, insbesondere durch Zuführung oder Abführung von Energie. Damit ist z.B. auch die Handhabung von zum Durchgehen neigenden, also stark exothermen Reaktionen möglich. Diese ist mit bekannten Vorrichtungen des Standes der Technik nicht möglich. Die Stoffverteilungseinheit ermöglicht die Verteilung von Stoff- und Energieströmen an alle Reaktoren auf engstem Raum. Durch den speziellen lamellenartigen Aufbau des Stoffverteilers und die Verwendung sehr kompakter, für extreme Bedingungen geeigneter Ventile, wird die Anzahl und die Länge der benötigten Kapillar-Leitungen und benötigte Verbindungselemente drastisch reduziert, was zu einer größeren Übersicht bei einer Vielzahl von Einzelreaktoren und damit zu einer sicheren Handhabung führt.

Eine besonders bevorzugte Ausgestaltung der Vorrichtung ist dadurch gekennzeichnet, dass die Vorrichtung modular aufgebaut ist, wobei die Einzelreaktoren die Heizeinrichtung, die Kühleinrichtung, die Kontrolleinheit, die Rührvorrichtung, gegebenenfalls die Stoffverteilereinheit und gegebenenfalls die Versorgungseinheit, unabhängig voneinander wechselbar ausgebildet sind.

Generell besteht die Möglichkeit mit der Vorrichtung die konventionelle Labortechnik zu rationalisieren und chemische Versuche gleichzeitig unter verfahrenstechnischen Gesichtpunkten reproduzierbar durchzuführen und die gesamt Entwicklungszeit neuer Verfahren wesentlich zu beschleunigen. Dabei ist die erfindungsgemäße, modular aufgebaute Vorrichtung als automatisiertes, miniaturisiertes System für eine komplette Versuchsdurchführung zu sehen.

Um all dies zu erreichen, ist es hilfreich die Module zu miniaturisieren und so zu gestalten, das unterschiedliche Reaktionsversuchsabläufe einfach durchgeführt werden können, ohne dabei die maximal möglichen Einsatzgrenzen der vollständigen modularaufgebauten Vorrichtung zu verändern. Eine effiziente Optimierung derartiger chemisch-verfahrenstechnischer Fragestellungen ist nur sinnvoll, wenn alle apparativen und steuerungstechnischen Module zueinander passend gestaltet sind, so dass die resultierenden Kombinationen nicht begrenzend und einengend auf die verschieden schnell ablaufenden Syntheseabläufe wirken und alle sinnvollen Freiheitsgrade hinsichtlich der chemisch-verfahrenstechnischen Fragestellung zulassen, ohne dabei die Übertragbarkeit der resultierenden Ergebnisse hinsichtlich eines Produktionsprozesses zu gefährden. Dabei ist es vorteilhaft den Miniaturisierungsgrad auf Ansatzgrößen (Gesamtvolumen des Probengefäßes) von 0,5 ml bis 50 ml zu begrenzen, besonders geeignet ist die Verkleinerung auf eine Ansatzgröße von 1 bis 20 ml. Ansätze mit mehr als 50 ml Inhalt sind kostenintensiv, teilweise für neuartige Substanzen nicht durchführbar, da die Produktmengen für parallelisierte Serienversuche nicht verfügbar sind. Bei der Einsatz-Überprüfung von besonders teuren Ausgangssubstanzen für die Entwicklung von neuen Produkten, aber auch für die Qualitätsüberprüfüng von teuren z.B. pharmazeutischen oder biologischen Wirkstoffen ist dieser Miniaturisierungsgrad besonders geeignet. Die Anwendungsfälle für konventionelle Analytikarbeiten, bei denen eine umfangreiche Probenvor- bzw. -aufbereitung nötig ist, könnten mit der erfindungsgemäßen Vorrichtung wirtschaftlicher durchgeführt werden. Die Bedeutung eines richtigen und geeigneten Miniaturisierungsgrades wird sichtbar, bei der Verarbeitung von scherempfindlichen Substanzen, die unter Schereinwirkung koagulieren und Kanäle, Ventile, Wärmeaustauscher etc. zwangsläufig verstopfen und eine störungsfreie Versuchdurchführung verhindern.

Durch eine entsprechend den Versuchsanforderungen bestückte Versorgungseinheit besteht die Möglichkeit, dass u. a. eine schnelle exotherme chemische Reaktion unter Weglassen der Aufheizphase durchgeführt werden kann, so dass der Beginn einer Reaktion mit der Eduktzuführung und gegebenenfalls einer Reaktantdosierung synchronisiert zur gleichen Zeit bei definierter Temperatur und Druck möglich wird.

Insbesondere bei schnellen Reaktionsabläufen ist darauf zu achten, dass nicht schon während der Aufheizphase der größte Teil des Reaktionsansatzes umgesetzt wird und eigentliche relevante Parameter auf Prozessniveau für den späteren Produktionsmaßstab an Gewicht verlieren und nicht mehr übertragbar sind. Diese Möglichkeit ist bei Vorrichtungen, die dem Stand der Technik entsprechen, nicht uneingeschränkt möglich.

Durch die bevorzugte Schrägstellung des gesamten Reaktorblocks besteht die Möglichkeit, den Einsatz von Probenmengen bestehend aus Flüssigkeit und Feststoff bei effizienter Durchmischung weiter zu reduzieren. Dabei kann das Volumen des Reaktionsansatzes auf <5 ml (<1ml) reduziert werden. In diesen Fällen ist es besonders vorteilhaft durch den Austausch einzelner Module sich auf einfache Art den Versuchsanforderungen anzupassen. Die Ansatzgröße bestimmt im wesentlichen auch das Erkennen einer exothermen Reaktion. Die Gesamtmasse der umgebenden Kammer-, Heiz- und Kühleinheiten darf nicht dazu führen, dass der reaktionsbedingte Temperaturanstieg unterdrückt wird, und so die Exothermie nicht erkannt und ausgewertet werden kann.

Bei den in der erfindungsgemäßen Vorrichtung vorzugsweise eingesetzten Reaktormodulen, können kleinste Temperaturveränderungen erkannt und registriert werden, so dass eine reproduzierbare Versuchsdurchführung im miniaturisiertem Maßstab möglich ist.

Insbesondere der Einsatz einer massenoptimierten Heiz- und Kühleinheit mit zweizügigem spiralförmigen Kühlkanal ermöglicht ein gezieltes Gegensteuern der Reaktionstemperatur in der Reaktionskammer, in der Form, dass zuerst mit einem Kühlmedium mit geringer Wärmeaufnahmekapazität gekühlt werden kann und erst bei nicht ausreichender Kühlleistung parallel ein zweites Kühlmedium hinzugeschaltet werden kann, um den Prozess hinsichtlich der Temperatur zu stabilisieren. Durch diese Kühlmethode wird erst die miniaturisierte Prozessführung von exothermen Reaktionen bei kleinen Reaktionsansätzen (<5ml) ermöglicht. Durch Apparate aus dem Stand der Technik wird diese Problemstellung nicht gelöst, es können derartige Fragestellungen mit parallelisierten Ansätzen nicht bearbeitet werden.

Die besonderen Stoffverteiler ermöglichen die gleichmäßige Verteilung von Stoff- und Energieströmen an alle Reaktoren auf engstem Raum. Durch den speziellen lamellaren Aufbau des Moduls und die Verwendung sehr kompakter, für extreme Bedingungen geeigneter Ventile, wird die Anzahl von Verbindungsstellen und somit mögliche Leckagestellen bei hohen Drücken, sowie die Länge der benötigten Kapillar-Leitungen drastisch reduziert, was zu einer größeren Übersicht, hohen Betriebssicherheit und damit zu einer einfachen und sicheren Handhabung der erfindungsgemäßen Vorrichtung führt. Die spezielle Bauweise der bevorzugt eingesetzten steuerbaren Ventile mit z.B. intregriertem pneumatischen Antrieb im Bereich der Ventil-Kopfplatte verringert die Ansprech- oder Schaltzeiten der Ventile erheblich. Des weiteren sind für automatisierte ganzheitliche Versuchsabläufe von parallelisierten Reaktionssystemen sehr viele steuerbare Ventile nötig die auf kleinstem Raum untergebracht werden müssen. Nicht selten werden bis zu 10 Ventile pro Reaktor benötigt, so dass die zugeschnittene Ventilbauart wesentlich wirtschaftlicher und kostengünstiger ist, als konventionelle Lösungen mit bekannten Ventiltypen.

Ein weiterer Vorteil ist durch die Versorgungseinheit gegeben. Auf der Versorgungseinheit erfolgt die Konzentration der zusätzlich benötigten miniaturisierten, apparativen Reaktorperipherie, um eine Versuch vollautomatisch durchführen zu können. Dazu zählen diverse zusätzliche miniaturisierte Apparate, wie z.B. Vorlagenbehälter, Puffer, Filtrationseinheiten, Mixer-Settler, On-line-Analytik, Pumpen sowie weitere Ventile und die benötigte Sensorik und Aktorik für die Messung von physikalischen Parametern. Die Versorgungseinheit kann auch Bestandteil eines Liquid-Handlers sein und gegebenenfalls in einer Glove-Box positioniert werden. Dadurch ist eine Handhabung von Flüssigkeiten und Feststoffen unter Inertbedingungen möglich. Damit ist es möglich, die Probenvorbereitung direkt mit der parallelisierten Versuchsdurchführung zu verknüpfen.

Die Kontrolleinheit, z.B. bestehend aus Sensor- und Aktorplatine, kann direkt an der Versorgungseinheit positioniert sein damit kurze elektrische Kabelwege ermöglicht werden. Aufgrund der Vielzahl von unterschiedlichen Sensoren und Aktoren können bis 500 sogenannte MSR-Stellen verschaltet und gebündelt über vieladrige Flachbandkabel zum Prozessleitsystem geführt werden. Diese Modultechnik spart Platz, Kosten und produziert Flexibilität bei Einsatz unterschiedlicher Sensorik für verschiedene Fragestellungen bei der parallelisierten Versuchsdurchführung. Insbesondere bei wechselnden Aufgabenstellungen ist ein leichtes Nach- oder Umrüsten möglich.

Die erfinderische Vorrichtung wird im wesentlichen auf dem Gebiet der Material- und Katalysatorentwicklung eingesetzt werden. Zu untersuchende Eigenschaften in Abhängigkeit von Temperatur, Druck, Rührgeschwindigkeit, Konzentration usw. können z.B. sein:
■ der Umsatz einer chemischen Reaktion
■ die Selektivität einer chemischen Reaktion
■ die Ausbeute einer chemischen Reaktion
■ die Alterungsbeständigkeit einer Substanz
■ der Viskositätsverlauf einer flüssigen Substanz / eines flüssigen Substanzgemisches
■ der Energieverbrauch
■ die Energieerzeugung
■ der Temperaturverlauf
■ der Druckverlauf
■ die Löslichkeit
■ die Korrosion
■ die Wärmebeständigkeit

Die Erfindung wird nachstehend anhand der Figuren beispielhaft näher erläutert.

Es zeigen:
- Figur 1: den Aufbau eines Einzelreaktors 1
- Figur 2: den Querschnitt durch eine Versuchsvorrichtung mit sechs Einzelreaktoren in einer Aufnahmeeinheit

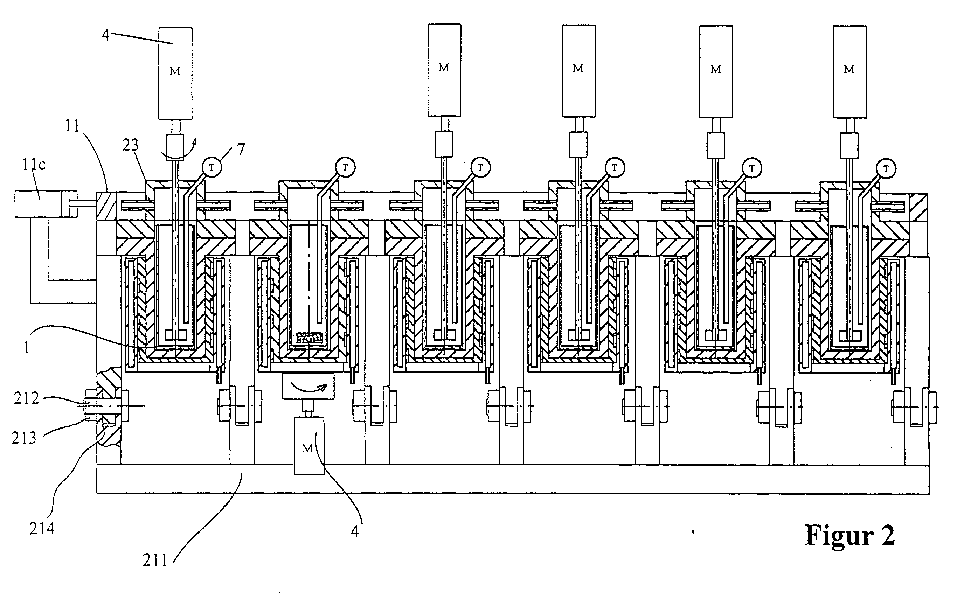

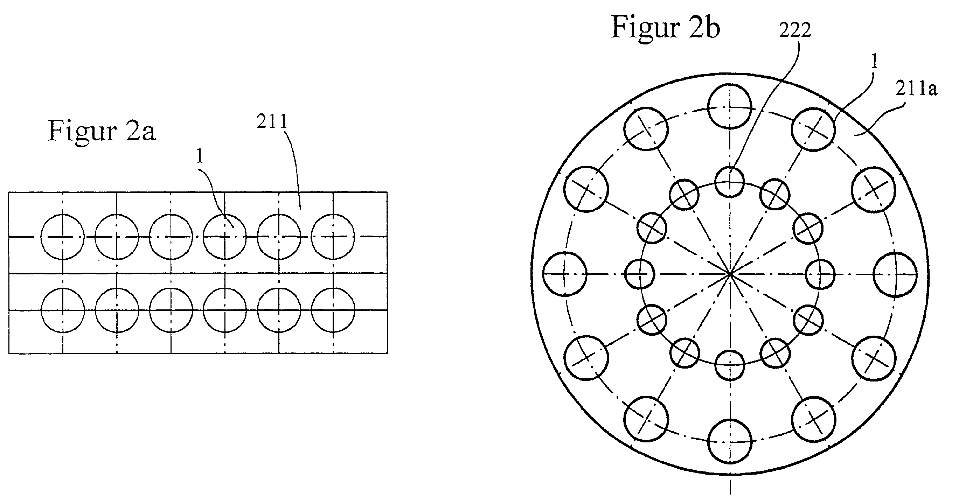

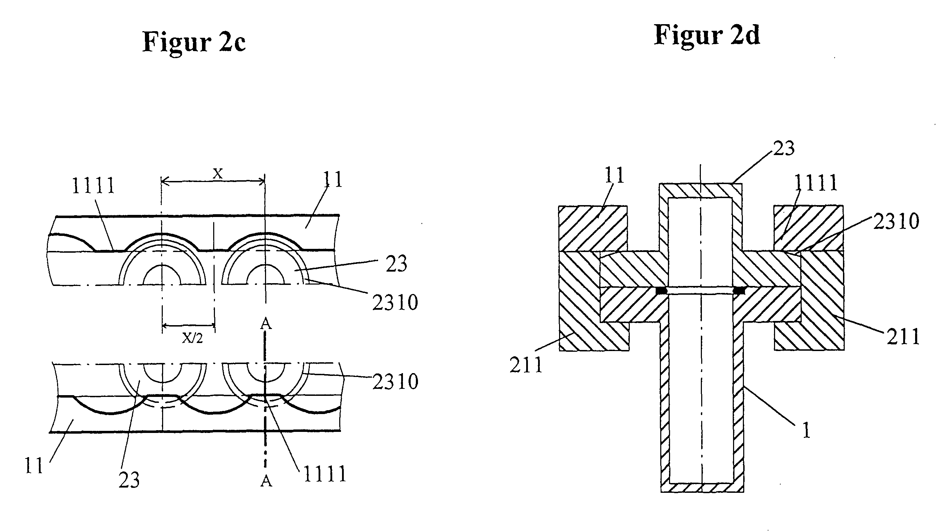

- Figuren 2 a, b: zwei Varianten für eine Aufnahmeeinheit
- Figuren 2c, 2d: Darstellung der Verschlusseinheit im geschlossenen und geöffnetem Zustand

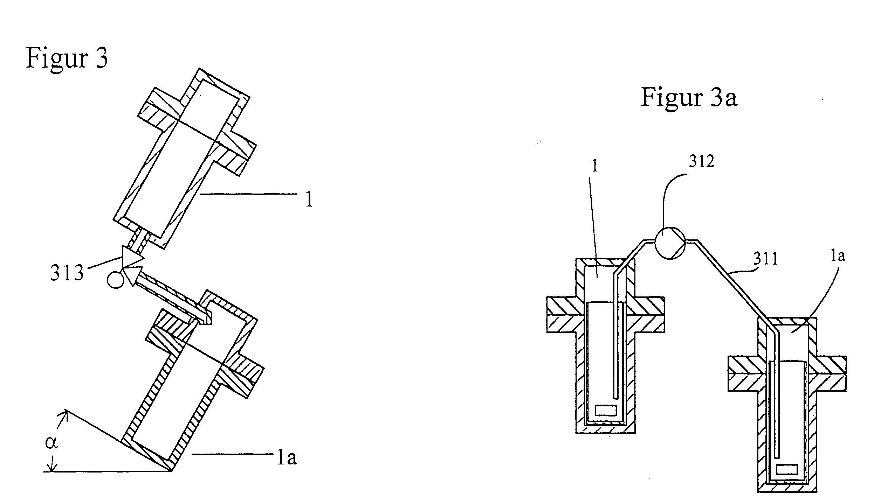

- Figuren 3 a, b: Beispiele für die serielle Kopplung zweier Einzelreaktoren in benachbarten Aufnahmeeinheiten

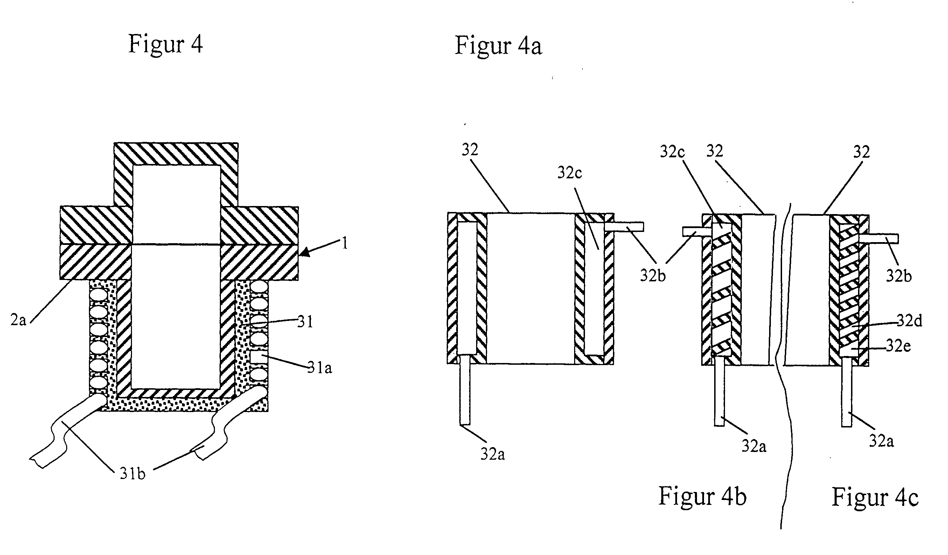

- Figur 4: einen Querschnitt durch einen Reaktor mit elektrischer Heizung
- Figuren 4 a, b, c: Beispiele für modulare Heiz-/Kühleinrichtungen

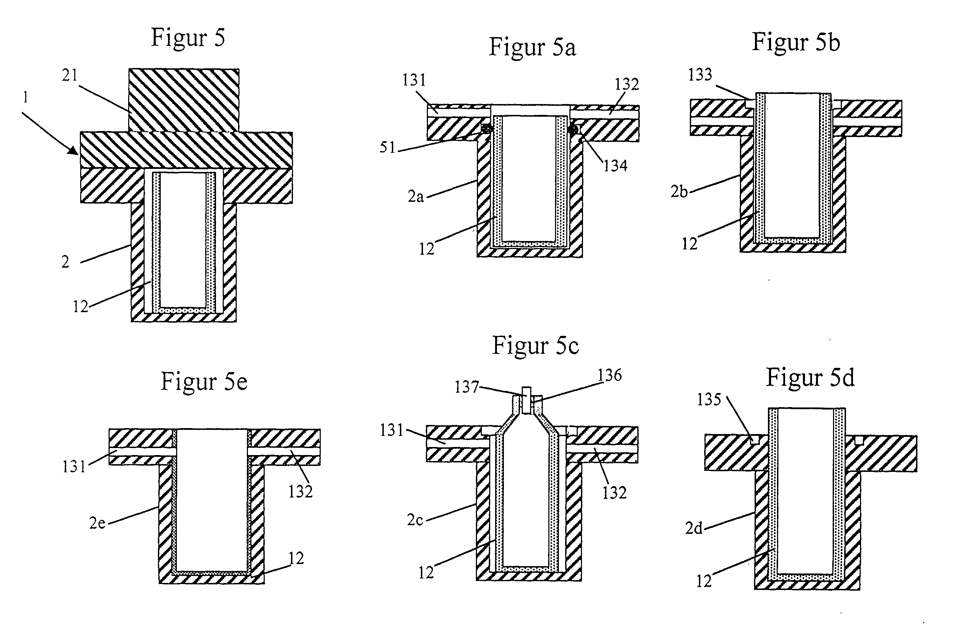

- Figuren 5, 5 a-e: im Querschnitt verschiedene modulare Formen der Kammer 2 bis 2 e des Einzelreaktors 1

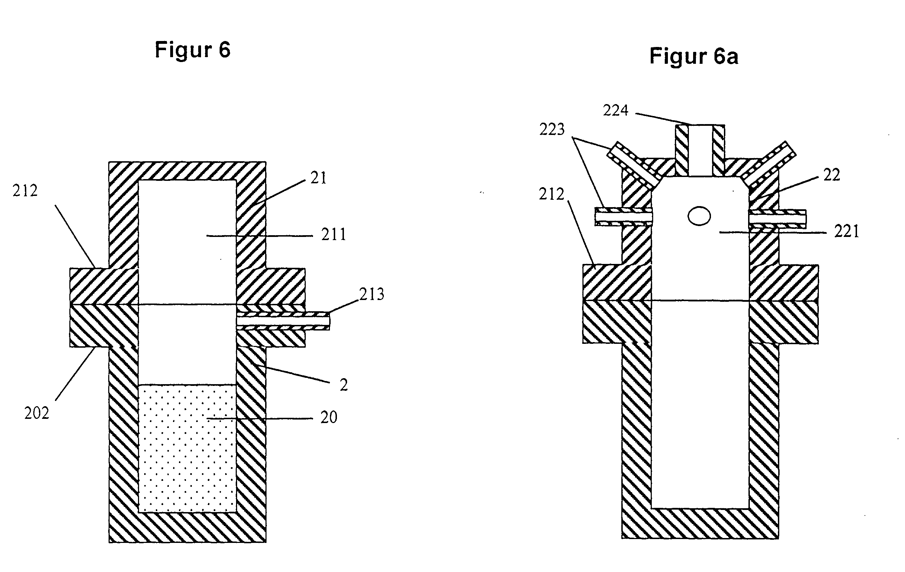

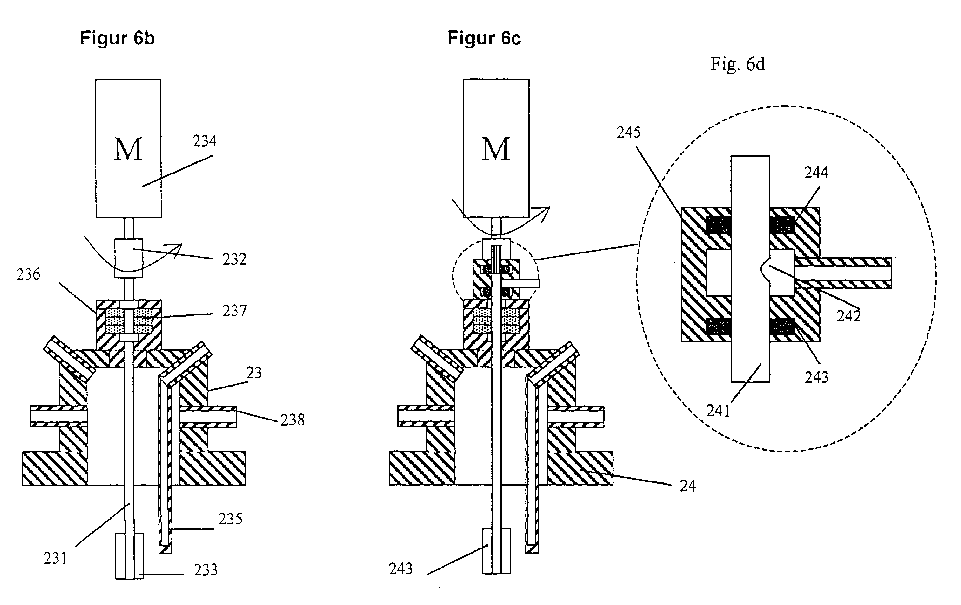

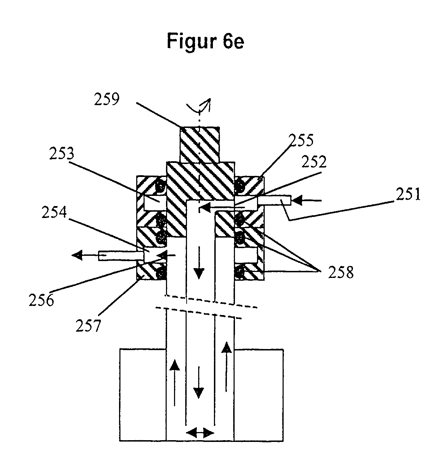

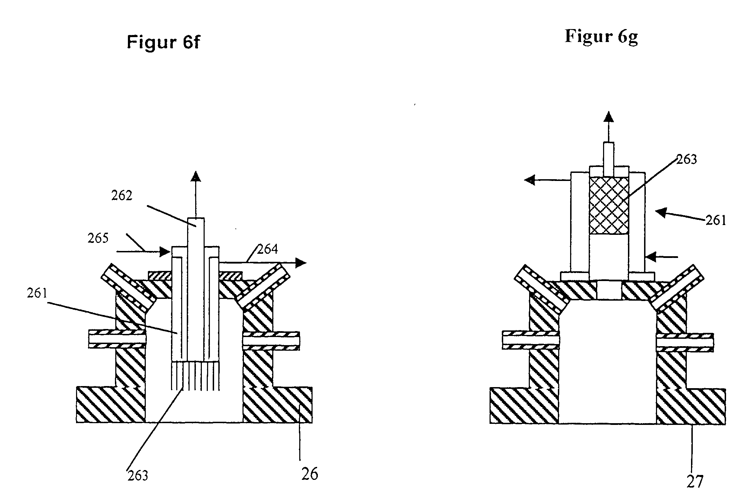

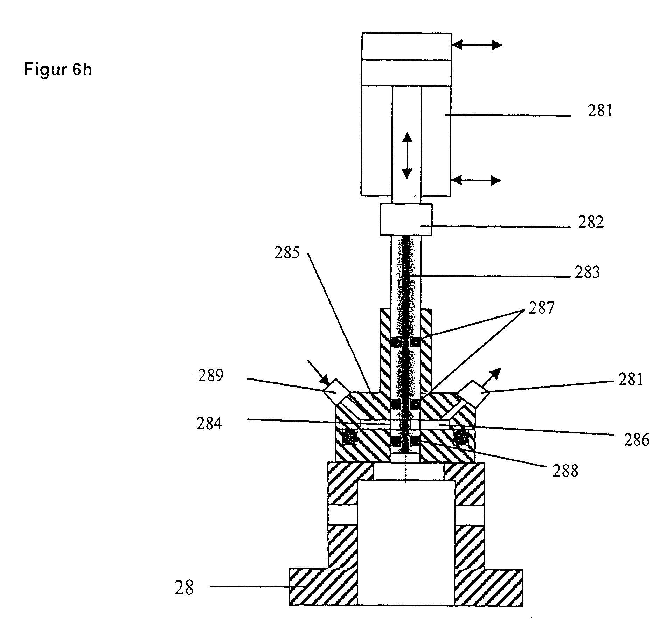

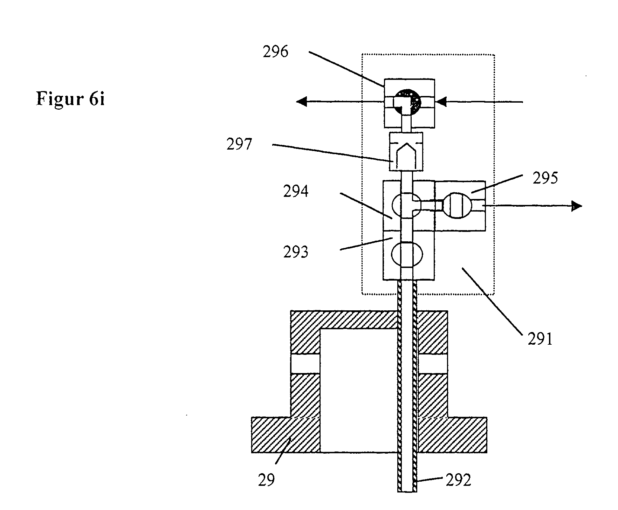

- Figuren 6, 6 a-i: im Querschnitt verschiedene modulare Bauformen der Deckel 21 bis 29 des Einzelreaktors 1

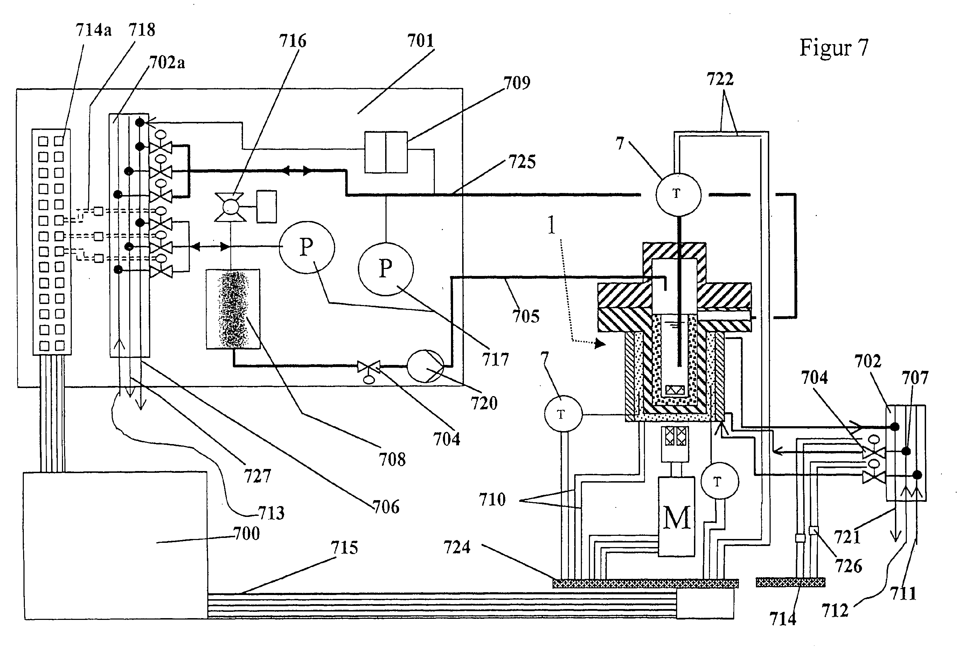

- Figur 7: eine schematische Übersicht über eine erfindungsgemäße Versuchsvorrichtung

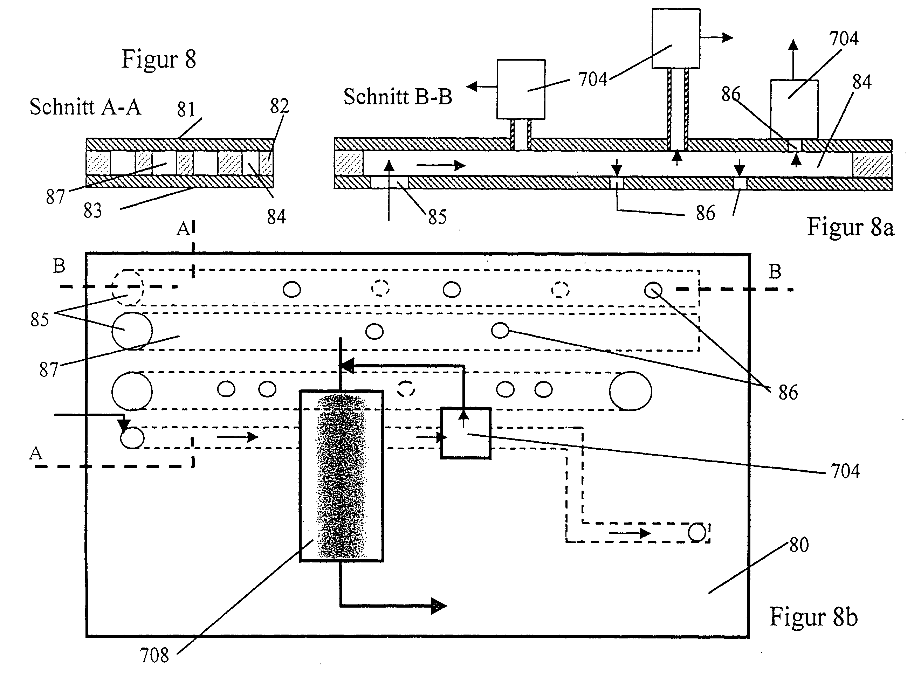

- Figur 8: den Querschnitt durch eine Stoffverteilereinheit entspr. Linie A-A in Figur 8 b
- Figur 8 a: den Längsschnitt entsprechend Linie B-B in Figur 8 b
- Figur 8 b: eine Aufsicht auf eine Stoffverteilereinheit

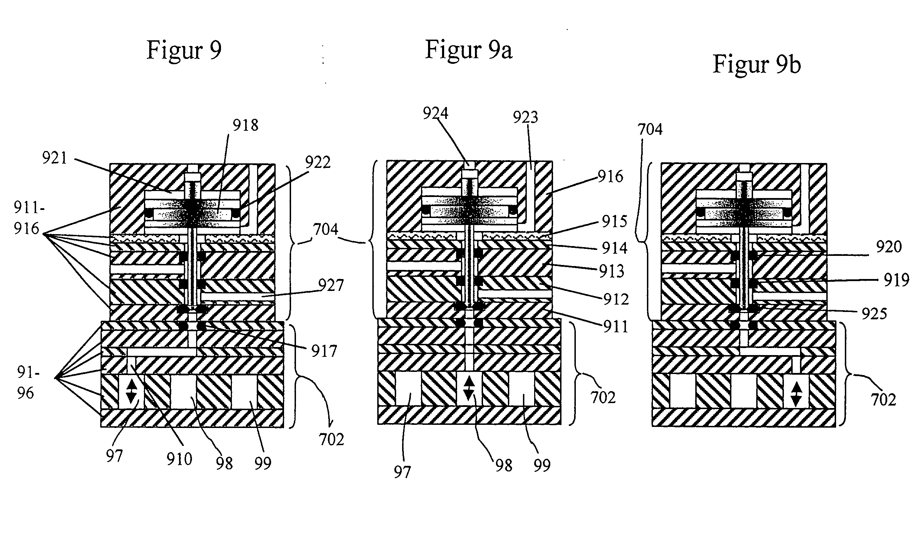

- Figuren 9, 9a, b: den Querschnitt durch die Stoffverteilereinheit 702 mit darauf montiertem Plattenventil 704

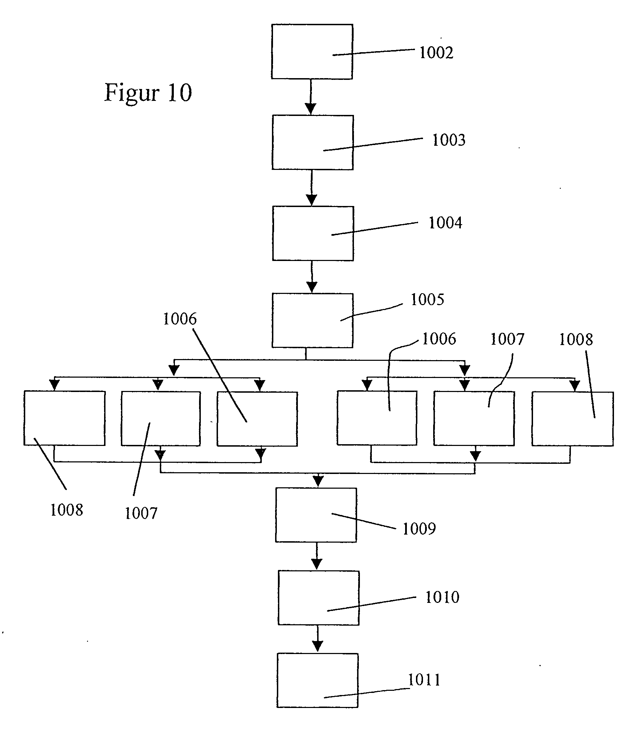

- Figur 10: ein Blockschema zur Erläuterung der Softwaremodule für eine Versuchsdurchführung

### Beispiele

In Figur 7 ist eine Übersicht der verschiedenen Teile einer Versuchsvorrichtung und deren Verschaltung dargestellt, z.B. der modular aufgebaute Einzelreaktor 1 mit einem Deckelmodul 22, den Stoff-Verteilern 702, 702a mit den Plattenventilen 704 und die Versorgungseinheit 701, die hier als einfache Montageplatte ausgeführt ist. In speziellen Anwendungen ist die Versorgungseinheit 701 mit integrierten Hauptverteilungskanälen als flächiger Stoff-Verteiler 80 (siehe Figur 8) ausgebildet und mindestens einem Einzelreaktor zugeordnet. Außerdem sind Interface-Module 714, 724 vorgesehen in Form der Sensor- und Aktorplatine, die wiederum an der Kontrolleinheit 700 und einem PC (nicht gezeichnet) angeschlossen ist.

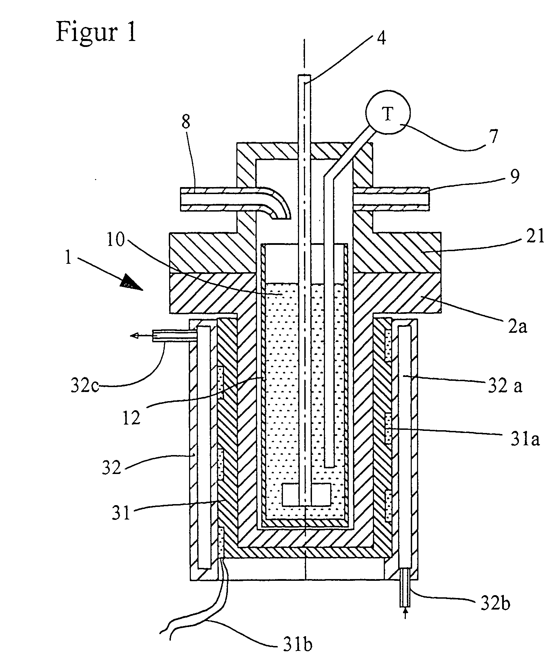

In der Figur 7 ist zu erkennen, dass sich im Einzelreaktor 1 ein Probengefäß befindet und ein Magnetrührer 4 eingesetzt ist, der durch eine aussenliegende Magnetkupplung mit Motor angetrieben wird. Der modulare Aufbau des Einzelreaktors 1 ist mit einer anderen Rührervorrichtung 4 in Figur 1 weiter unten beschrieben.

Am Heiz-/Kühlmodul des Einzelreaktors 1 ist eine Stoff-Verteilereinheit 702 angeschlossen, die z.B. zwei zuführende Stoffkanäle, z.B. für Kühlwasser 711 für Kühlluft 712 einen Kanal 721 für die gemeinsame Ausschleusung der Kühlluft und des Kühlwassers, besitzt. Jeder einzelne Hauptverteilungskanal (711, 712, 721) des Stoff-Verteilers 702 besitzt, entsprechend der Anzahl parallel installierter Einzelreaktoren zuführende bzw. abführende Ausgänge 707, die mit steuerbaren Ventilen 704 bestückt sind.

Werden zur Versorgung des Einzelreaktors 1 aufgrund der spezifischen Versuchsanforderung weitere verfahrenstechnische Komponenten benötigt (z.B. Behälter), so können diese auf der Versorgungseinheit 701 einem oder mehreren Einzelreaktoren zugeordnet montiert werden.

Zusätzliche verfahrenstechnische Komponenten, ist beispielsweise ein Behälter 708 zur Bereithaltung einer Reaktionskomponente, die zum Zeitpunkt des Synthesestarts bei geöffnetem steuerbaren Ventil 704 mit einer Pumpe 720 der Reaktion im Einzelbehälter 1 zudosiert werden kann, und einen Drucksicherung in Form einer Berstscheibe 709 die den Einzelbehälter gegen Überdruck sichert.

Des weiteren ist ein Stoff-Verteiler 702a enthalten, um jeden Einzelreaktor 1 mit einer zu- und abführenden Kapillare 725 mit z.B. Stickstoff 713, Vakuum 706 und einer Belüftungsmöglichkeit 727 zu versehen. Der gleiche Stoff-Verteiler 702a, wie in der Figur 7 dargestellt, kann ebenfalls die Aufgabe übernehmen, den Behälter 708 mit Füllventil 716 zu evakuieren, zu inertisieren oder zu belüften und zusätzlich die abführende Leitung der Berstscheibe 709 anzubinden.

Auf der Versorgungseinheit ist zur Kontrolle des Drucks im Einzelreaktor 1 und im Behälter 708 beispielsweise je ein Sensor 717 an der Belüftungsleitung angeschlossen.

Die automatisierte, rationelle und reproduzierbare Durchführung von Synthesen im kleinem Massstab für chemische und verfahrenstechnische Aufgabenstellungen fordert größtmögliche Information aus dem Versuch, so dass die Installation von vielen Sensoren resultiert. Aus diesem Grund ist das Interface-Modul 714, 724 in Form von Sensor- und Aktorplatine nah an den jeweiligen Einzelreaktoren und benötigten verfahrenstechnischen Komponenten positioniert.

Diese Strategie vereinfacht das Verlegen der vielen elektrischen Kabel von beispielsweise Druck- und oder Temperatursensoren von elektro-pneumatischen Ventilen 726 zur Ansteuerung der Ventile, von Anschlüssen für die elektrische Heizung 710, der elektrischen Versorgung der Rühreinrichtung 4 und, wenn erforderlich und von der verfahrenstechnischen Aufgabe her notwendig, von weiteren elektrischen Sensoren. Die Interface-Module sind durch ein vieladriges Kabel 715 mit der Kontrolleinheit 700 verbunden, an die auch der Personalcomputer (PC), der hier nicht dargestellt ist, angeschlossen ist. Aufgrund der teilweise sehr komplexen Aufgabenstellungen kann die Anzahl der Mess- und Regelstellen der Gesamtvorrichtung schnell auf mehr als 200 steigen.

Mit der Kontrolleinheit 700, den beschriebenen Software-Einheiten und dem PC erfolgt die Kommunikation mit dem chemisch verfahrenstechnischen Prozess, so dass die gemessenen Signale mathematisch umgeformt und verrechnet werden können, um neue Steuersignale zu generieren und damit den Prozess zu kontrollieren.

Im folgenden werden die modularen Einzelkomponenten der Versuchsvorrichtung näher beschrieben:

In Figur 1 ist der Aufbau des Einzelreaktors 1 dargestellt. Der Einzelreaktor 1 ist selbst modular aufgebaut und wird aus der druckfesten Kammer 2a, in der ein Probengefäß 12 zur Aufnahme des Prozessstoffes 10 eingesetzt ist, gebildet. Auf der druckfesten Kammer 2a wird je nach verfahrenstechnischer Aufgabenstellung ein speziell ausgeführter druckfester Deckel 21 positioniert. Über den Deckel wird eine Rührvorrichtung 4 und ein Temperatursensor 7 in das Probengefäß 12 mit dem Prozessstoff 10 getaucht. In der Darstellung nicht gezeigt, ist eine Dichtung die zwischen der Kammer 2a und dem Deckel 21 eingesetzt ist. Der druckfeste Deckel hat mindestens eine Zuleitung 8 und eine Ableitung 9, über die Substanzen gegen Druck eingeleitet oder abgeführt werden können. Im unteren Teil des Einzelreaktors 1 befindet sich eine elektrische Heizeinrichtung 31. Sie besitzt am äusseren Umfang mindestens eine spiralförmig umlaufende Nut 31 a, in die der elektrische Heizdraht 31b eingelegt ist, um die gewünschte Heizenergie dem Einzelreaktor 1 zu führen zu können. Die Heizeinrichtung 31 umschliesst den Boden des Einzelreaktors 1 vollständig, so dass auch bei kleinen zu untersuchenden Einsatzmengen die zur Verfügung stehende wärmeübertragende Fläche ausreichend gross ist. Die Heizeinrichtung 31 wird von der Kühleinrichtung 32 umschlossen. Die Kühleinrichtung 32 besitzt einen Doppelmantel, der einen Hohlraum 32a, umschließt in den eine Zuleitung 32b für die Zuführung eines Temperier- oder Kühlmittels und eine Ableitung 32c für die Abführung des Temperier- oder Kühlmittels mündet.

Der äussere Umfang des unteren Teils des Einzelreaktors 1 hat metallischen Kontakt mit der Heizeinrichtung 31 und die Heizeinrichtung hat metallischen Kontakt mit der Kühleinrichtung 32, so dass eine gute Wärmeleitung zwischen den einzelnen metallischen Bauteilen gewährleistet ist.

Der dargestellte Temperatursensor 7 ist mit der Kontrolleinheit 700 (siehe Figur 7) verbunden.

In Figur 2 sind sechs Einzelreaktoren 1 mit einem Deckel 23 und Temperatursensor 7 in einer Aufnahmeeinheit 211 nebeneinander dargestellt. Des weiteren ist beispielsweise der pneumatische Antrieb 11c, mit dem der Verschlussriegel 11 bewegt werden kann, zu erkennen, um die Einzelreaktoren simultan, druckfest zu verriegeln.

In der Figur 2 sind fünf am Deckel und ein am Boden des Einzelreaktors 1 angebrachte Rührvorrichtungen 4 dargestellt.

Die Säulen 214 der Aufnahmeeinheit können als Scharnier ausgebildet sein, so dass das gesamte Reaktorsystem mit Verschlusseinheit um einen Winkel α von 5 bis 60° geschwenkt und mit den Schrauben 212 und der Mutter 213 fixiert werden kann.

In der Figur 2a ist veranschaulicht, dass die Anzahl der Einzelreaktoren 1 leicht auf 12 Einzelreaktoren erhöht werden kann, indem die Aufnahmeeinheit 211 zusätzlich parallel erweitert, oder eine andere Form der Aufnahmeeinheit gewählt wird, z.B. eine kreisförmige Anordnung 211a (Figur 2b) mit zugehörigen Substanzvorlagen 222.

In Figur 2c, in der oberen Darstellung wird eine Hälfte des Verschlussriegels 11 im offenen Zustand gezeigt. Es ist zu erkennen, dass der Verschlussriegel besonders geformt ist und eine Klaue 1111 besitzt, die im offenen Zustand des Verschlussriegels zwischen zwei Deckeln (z.B. 23) steht, so dass ein Bediener jeden Einzelreaktor 1 durch Abnehmen des Deckels (z.B. 23) öffnen kann. Der Deckelflansch besitzt eine Phase 2310, die es ermöglicht, dass beim Verriegeln (siehe Fig. 2c unten) durch den pneumatischen oder elektrischen Antrieb die Klaue 1111 über die Phase 2310 auf die Oberfläche des Deckelflansches 23 rutschen kann, um die benötigte Dichtkraft auf die eingelegte Dichtung zwischen druckfester Kammer des Einzelbehälters 1 und Deckel 23 aufzubringen. Der Schließweg des Verschlussriegels 11 beträgt dabei den halben Einzelreaktor-Achsabstand X.

Figur 2d zeigt den Schnitt A-A aus Fig. 2c eines verriegelten Einzelbehälters 1. Zu erkennen ist die Phase 2310 am oberen Flansch des Deckels 23 und dass die Riegelklaue 1111 im Endzustand den Deckel 23 auf die Kammer drückt und dadurch die eingelegte Dichtung zusammenpresst.

In den Figuren 3 und 3a ist schematisch eine serielle Verbindung von je zwei Einzelreaktoren 1 (in benachbarten Aufnahmeeinheiten) dargestellt, und zwar mit einer in der Höhe versetzten Anordnung der Einzelreaktoren 1 und 1a durch eine verbindende Kapillare 311 und einer zwischengeschalteten Förderpumpe 312 (Fig.3a) und einem zwischengeschalteten steuerbaren Ventil 313 (Figur 3).

Damit kann eine kontrollierte Substanzüberführung vom Einzelreaktor 1 zum Einzelreaktor 1a erfolgen. Die Kammer des Reaktors 1a ist einstückig ausgebildet mit dem Probengefäß. Der planare Boden weist einen Winkel α von 30° zur Horizontalen auf (Figur 3).

In Figur 4 ist der Einzelreaktor 1 mit der druckfesten Kammer 2a und der übergestülpten Heizeinrichtung 31 zu sehen. Die Heizeinrichtung 31 hat auf dem äusseren Umfang eine spiralförmig verlaufende Nut 31a, wobei der Nutgrund der Form des elektrischen Heizdrahtes 31b angepasst ist um eine gute Kontaktfläche und Wärmeübertragung zu erreichen.

In den Figuren 4a, 4b und 4c sind weitere alternative Bauformen für die Heiz-/ Kühleinrichtung 32 dargestellt. Die Kühleinrichtung 32 in Figur 4a besitzt einen Doppelmantel, der einen konzentrischen Hohlraum 32c mit Zuführleitung 32a und Abführleitung 32b zum Durchleiten eines Kühl- oder Temperiermediums umschließt.

Zur Erhöhung der Temperierfläche ist in der Figur 4b der konzentrische Hohlraum besonders ausgebildet. Der temperierende Hohlraum 32c wurde gebildet durch einen spiralförmig verlaufenden Kanal. In Fig. 4c ist eine Ausführungsform mit zwei spiralförmig verlaufenden Temperierkanälen 32e, 32d dargestellt. Jeder Temperierkanal besitzt eine Zuführleitung 32d und eine Abführleitung 32b.

Für die Temperierung der Reaktoren 1 sind die nachfolgend beschriebenen Varianten der Kammer 2 besonders geeignet.

In den Figuren 5 bis Figur 5e sind unterschiedliche Ausführungsformen der druckfesten Kammer dargestellt. Die druckfesten Kammern werden mit den Deckeln 21 - 29 wahlweise zu einer druckdichten Reaktoreinheit 1 kombiniert.

In der Form nach Figur 5 ist der Deckel 21, in einer speziellen Form ohne inneren Hohlraum, mit der druckfesten Kammer 2 und einem eingesetzten Probengefäß 12 zu sehen.

In der Ausführung nach Figur 5a ist das einsetzbare Probengefäß 12 auf seinem äußeren Umfang mit einem elastischen O-Ring abgedichtet. Die Kammer 2a besitzt unterhalb der Ein- und Austrittsöffnung der Zuführ- 131 und Abführleitung 132 eine eingearbeitete Nut 134 zur Aufnahme der elastischen Dichtung 51.

In der Variante nach Figur 5b ist die Kammer 2b an der Kontaktebene zum Deckel 21 mit einer rotationssymetrischen Vertiefung 133 versehen zur Aufnahme einer elastischen oder einer metallischen Dichtung.

In der Ausführung nach Figur 5c ist die druckfeste Kammer 2c mit mindestens einer Zuführleitung 131 und/oder mindestens einer Abführleitung 132 dargestellt. Das eingesetzte Probengefäss 12 ist mit einem Septum 136 verschlossen und zusätzlich mit einer Kapillaren 137 versehen für einen möglichen Druckausgleich zwischen druckfester Kammer 2c und dem Innenraum des Probengefässes.

In der Variante nach Figur 5d besitzt die Kammer 2d keine Produktanschlüsse und das Probengefäß liegt eng an der inneren Wandung der Kammer 2d an. In die konzentrische Nut 135 kann eine Dichtung eingelegt werden, so dass der anliegende Deckel 22 den Innenraum des Einzelreaktors gegen Überdruck dichtet.

In Figur 5e ist die Kammer 2e mit einem inerten korrosionsfesten Material (Emaill) beschichtet, so dass kein Probengefäß 12 für die durchzuführenden Versuche benötigt wird.

In den Figuren 6 und Figur 6a - i sind verschiedene Bauformen und Kombinationen der auswechselbaren Deckel 21, ..... 29 dargestellt. Die vielen alternativen Deckelmodule machen die Flexibilität hinsichtlich der unterschiedlichen chemischen und verfahrenstechnischen Fragestellung und Versuchsdurchführung deutlich.

In Figur 6 ist die einfachste Ausführungsform in Form des Deckels 21 in Verbindung mit der Kammer 2 und dem dazugehörigen Versuchsraum 20 dargestellt. Die Kammer 2 enthält kein trennbares Probengefäß 12. Das Innere des Deckels 21 ist ausgearbeitet, so dass sich der Hohlraum 211 bildet. Das Volumen des gesamten Versuchsraumes wird aus dem Hohlraum 211 und dem Versuchsraum 20 gebildet. Substanz zuführende oder abführende Anschlussleitungen 213 sind in der Kammer 2 vorgesehen. In der Figur 6 nicht dargestellt sind die erforderlichen Dichtungen im horizontalen Flanschbereich von Deckel und Kammer. Des weiteren ist ein abgesetzter konzentrischer Flansch 212 am Deckel ausgebildet, der mit dem abgesetzten äußeren Ring 202 der Kammer 2 die Dichtkräfte zum druckfesten Verschluss des Versuchsraum aufnimmt.

In Figur 6a ist eine Variante eines Einzelreaktors 1 mit einem modifizierten Deckel 22 dargestellt. Die Darstellung des Deckels 22 zeigt den Versuchsraum 221 mit dem abgesetzten Flansch 212 und weitere separate zuführende oder ableitende Kapillaren 223, bzw. Öffnungen zum Anschluss kleiner Rohrleitungen, die im Deckel 22 direkt eingeschweißt sind. Eine der Öffnungen 223 kann dazu benutzt werden direkt ein Thermoelement für die Innentemperaturmessung einzusetzen. Im oberen Deckelbereich ist in der Regel eine Öffnung 224 vorgesehen, die es erlaubt, auch größere andere Bauteile zu adaptieren.

Figur 6b zeigt die Deckelvariante 23 mit einem Thermometerschutzrohr 235, zur Aufnahme eines Temperatursensors für die Innentemperatursteuerung, und einen in den Versuchsraum hineinragenden Rührer sowie weitere Zuleitungen und Ableitungen 238. Das Rührwerk besteht aus der Rührwellen 231 mit Rührblatt 233, wobei die Rührwelle im oberen Bereich und außerhalb des Deckels durch einen Dichtungsbereich 237 geführt wird und die Dichtung in einem druckfesten Gehäuse 236 sitzt. Als Dichtungsmaterialien und -typen können sowohl elastische O-Ringe aber auch temperaturbeständige Stopfbuchsenpackungen oder Wellendichtringe eingesetzt werden. Der Rührwellenstumpf der aus dem Gehäuse 236 ragt nimmt z.B. eine kraftschlüssige Kupplung 232 auf und schafft damit die Verbindung zum Rührerantrieb 234. Mit dieser Deckelvariante können insbesondere hohe Rührleistungen in das zu mischende Reaktionsgemisch übertragen werden.

Die Ausführung nach Figur 6c zeigt im Aufbau den Deckel 24 mit einer Ergänzung gegenüber Deckel 23 aus Figur 6b für die verfahrenstechnische Anwendung der direkten Gaseinleitung durch eine hohle Rührerwelle 241 (Detail Fig. 6d). Die Hohlrührwelle 241 hat am Wellenkopf eine Öffnung 242, zur Einleitung einer Substanz in den Innenraum der Rührerwelle und gleichzeitig ist die Rührwelle am Fuß geöffnet, so dass die eingeleitete Substanz direkt einer Synthese zugeführt werden kann. Um diesen Öffnungsbereich des Rührwellenkopfes ist ein zusätzliches Gehäuse 245 mit Dichtungen 244 (vergrößertes Detail siehe Figur 6d) nötig, damit die zuführende Substanz, die flüssig oder gasförmig sein kann, nicht in die Umgebung gelangt. Das Zusatzgehäuse 245 mit den Dichtungen 244 kann alternativ auch direkt auf den Deckel montiert werden (nicht gezeichnet), dann entfällt das Gehäuse 236 mit den Dichtungen 237.

Figur 6e zeigt eine Bauform einer geeigneten Rührerwellendurchführung für einen Reaktordeckel wie in Fig. 6c. Hierin ist die Deckelkontur des Deckels 25 nicht dargestellt, sondern nur die zu adaptierende doppelwandige Hohl-Rührwelle 259 zur direkten zusätzlichen Temperierung der eingesetzten Substanzen. Die doppelwandige Hohlrührwelle ist in der Ausführung am Fuß geschlossen, die Hohlwelle besitzt am Kopf eine Einströmöffnung 252, die von einem konzentrischen Versorgungsbereich 253 im Gehäuse 255 über die Einspeisung 251 mit dem Temperiermedium versorgt wird. Der Außenmantel des doppelwandigen Hohl-Wellenrührers besitzt eine Ausströmöffnung 256, von der das Temperiermedium in die konzentrische Nut 254 das Gehäuse 257 verlässt. Das Gehäuse und die doppelwandige Hohlrührwelle werden mit elastischen Dichtungen 258 zur Atmosphäre und zum Versuchsraum gedichtet. Am doppelwandigen Hohl-Wellenrührerkopf sitzt ein Wellenstumpf 259 der zur Aufnahme der Kupplung für ein Antriebsaggregat vorgesehen ist.

In der Figur 6f wird eine weitere Variante eines Reaktordeckels 26 mit einem Kühler 261 gezeigt, der in den Innenraum des Deckels 26 hineinragt. Der Kühler 261 besitzt im Zentrum einen Durchgangskanal 262 zur Aus- oder Einschleusung einer Reaktionskomponente, die beispielsweise beim Passieren des gekühlten Durchgangskanals temperiert wird. Der innenliegende Kühler 261 hat auch die Aufgabe leichtflüchtige Reaktionskomponenten im Gasraum oder Versuchsraum des Deckels 26 zu kondensieren. Deshalb sind am Fuß des Kühlers zusätzliche Kühlrippen 263 angebracht, wodurch die Kühlfläche wesentlich erhöht wird. Die Versorgungsanschlüsse 264, 265 für die Zuführung und Ableitung des Temperiermittels des innenliegenden Kühlers 261 befinden sich außerhalb des Deckels. Die Kühlrippen 263 können in einer nicht gezeichneten Darstellung auch am zylindrischen Umfang des Kühlers im Deckelhohlraum zur weiteren Erhöhung der Kühlfläche angebracht sein. Der innenliegende Kühler 261 kann als eigenständiges Bauteil am Deckel angeflanscht werden. Um jedoch zusätzliche Dichtungen einzusparen, ist der Kühler in der gezeigten Ausführungsform fest mit dem Deckel 26 durch Verschweißen verbunden.

Eine vergleichbare andere Bauform eines Deckels mit Kühler 261 zeigt Figur 6g. Darin ist der Kühler außerhalb des Deckels 27 angeordnet, wobei die Kühlrippen 263 im Innern des Kühlers positioniert sind. Die außenliegende Kühlerposition hat den Vorteil, dass aufgrund der räumlichen Freiheit das Kühlaggregat sehr groß dimensioniert werden kann. Zusätzlich besteht die Möglichkeit anstatt des Kühlers eine temperierbare thermische Trenneinheit auf den Deckel 27 zu positionieren.

In der weiteren Ausführungsform des Reaktordeckels nach Figur 6h ist der Deckel 28 mit einer Dosiervorrichtung 285 in Form eines Ringspaltdosierers versehen. Der Ringspaltdosierer besitzt an seinem Kopf eine Verstelleinheit 281 in Form eines pneumatischen Zylinders. Am Kolben des Zylinders ist über ein Kupplungsstück 282 der Dosierkolben 283 mit dem dynamischen Ringspalt 284 befestigt. Ist die Verstelleinheit 281 eingefahren, befindet sich um den dynamischen Ringspalt 284 des Kolbens 283 im Gehäuse 285 des Ringspaltdosierers ein konzentrischer statischer Ringspalt 286. Beide Ringspalte 284 und 286 bilden im eingefahrenen Zustand des Kolbens einen gemeinsamen großen konzentrischen Strömungsbereich. Der Dosierkolben 283 besitzt oberhalb des dynamischem Ringspaltes 284 des Dosierers mindestens zwei elastische Dichtungen 287 und unterhalb des Ringspaltes 284 mindestens eine elastische Dichtung 288. Die Dichtung 287 verlässt während eines Dosierhubes der Verstelleinheit 281 das Gehäuse 285 der Dosiervorrichtung nicht. Die Dichtung 288 verlässt während eines Dosierhubes das Gehäuse der Dosiervorrichtung 285, und befindet sich im ausgefahrenen Zustand der Verstelleinheit im Deckelhohlraum. Der konzentrische statische Ringspalt besitzt eine zuführende Öffnung 289 und eine abführende Öffnung 281. Da der konzentrische statische Ringspalt 286 größer ist, als der dynamische Ringspalt 284, bildet er einen Bypass-Kanal, so dass es möglich ist, eine von der Kolbenstellung unabhängige ständige Durchströmung der Dosiervorrichtung mit z.B. Reaktand zu realisieren.

Die Variante des Reaktordeckels nach Figur 6i ist ein Deckel 29 mit Probeentnahme-Vorrichtung 291. Die Probeentnahme 291 ist angeschlossen an ein innenliegendes Steigrohr 292 und besitzt zusätzlich eine Kombination von steuerbaren Ventilen. Direkt am Steigrohr 292 sitzt das Ventil 293, darüber ist ein Drei-Wege-Kugelhahn 294 angeordnet, welcher horizontal mit dem Kugelhahn 295 verbunden ist. Vertikal über dem Drei-Wege-Kugelhahn 294 befindet sich ein Rückschlagventil 297 mit einem Schließkörper der als Schwimmer ausgebildet ist und darüber ein weiterer Drei-Wege-Hahn 296. Bei aufsteigender Flüssigkeit aus dem Reaktionsraum schwimmt der Schließkörper auf und wird in den Dichtsitz des Rückschlagventils 297 gedrückt. Das mit dem Rückschlagventil 297 verbundene Ventil 296 ist in dem Moment an einen Unterdruckerzeuger (Vakuumseite) und an eine Inertgasversorgung (Druckseite) angeschlossen, wobei der Druck der Inertgasversorgung jeweils größer sein muss, als der vorherrschende Reaktorinnendruck zur Zeit der Probennahme. Das Ventil 295 ist an der Austrittsöffnung mit einem entsprechenden Analysegerät (z.B. HPLC) verbunden.

Die Probeentnahme durch den Deckel 29 erfolgt in mehreren automatisierten Steuerungsschritten und den dazu spezifischen Ventilstellungen:
a) Das Ventil 293 ist geöffnet; Ventil 294 ist auf vertikalen Durchgang gestellt; Ventil 295 ist geschlossen. Das Ventil 296 ist zur Unterdruckseite geöffnet. Diese Ventilstellungen ermöglichen ein Ansaugen der Reaktionsmischung bei druckloser Fahrweise über das Steigrohr 292, bis die aufsteigende Flüssigkeit den Schließkörper des Rückschlagventils 297 in den Dichtsitz drückt.
b) Das Ventil 293 wird geschlossen; Die Verbindung zum Prozessraum des Einzelreaktors wird damit verschlossen.
c) Das Ventil 296 ist zur Inertgasversorgung geöffnet. Ventil 295 ist ebenfalls offen und Ventil 294 stellt die Verbindung zum Ventil 295 sicher. Der Weg zum Analysegerät wird geöffnet, und durch die offene Stellung des Ventils 296 erfolgt vom Druck des Inertgasvorrat ein Verdrängen der angesaugten Flüssigkeit zwischen Ventil 293 und Ventil 297 zum Analysegerät.
d) Das Ventil 295 wird anschliessend geschlossen; der Weg zum Analysegerät ist dadurch unterbrochen und das freie innere Ventilvolumen der Ventile nimmt den Druck des Inertgases an.
   Nachdem das Probevolumen mittels Inertgasversorgung zum Analysegerät gedrückt worden ist, kann das restliche Reaktionsgemisch im Steigerohr 291 dem Prozessgemisch zurückgeführt werden.
e) Das Ventil 294 wird zur Verbindung der Ventile 293 und 297 wieder zurück gestellt. Die restliche Flüssigkeitsmenge im Innern des Steigrohres 291 wird durch den Inertgasdruck des Ventilhohlraumes dem Synthesegemisch zugeführt sobald Ventil 293 wieder geöffnet wird.

Die Figur 8b zeigt eine spezielle Ausführungsform der in Figur 7 beschriebenen Versorgungseinheit 701, als flächigen Stoffverteiler 80, der gleichzeitig als Versorgungseinheit dient, mit integrierten Hauptverteilungskanälen 84 für die Versorgung der Einzelreaktoren 1 z.B. mit besonders toxische Substanzen.

In Figur 8b ist der Stoffverteiler 80 mit integrierten Verteilungskanälen 84 in der Aufsicht schematisch dargestellt. Dieses einfache Ausführungsbeispiel zeigt einen flächigen Stoffverteiler mit wesentlich reduzierter Anzahl von möglichen Leckagestellen, der zur Versorgung der benötigten verfahrenstechnischen Komponenten für die parallel betriebenen Einzelreaktoren 1 dient. Es sind drei Verteilerkanäle 84 und ein Vakuumkanal 87 zu erkennen, wobei beispielsweise an einem zuleitenden Kanal 84 ein steuerbares Ventil 704 angeschlossen ist, über das der in unmittelbarer Nähe befindliche Substanzbehälter 708 mit Produkt versorgt werden kann.

In Figur 8 ist ein Teilschnitt entsprechend Linie A-A in Figur 8b des speziell ausgeführten Stoffverteiler 80 dargestellt. Es sind drei Metalllamellen 81, 82, 83 zu erkennen, die vollflächig miteinander verlötet sind. Damit sind die Schlitze 84 in der Lamelle 82 geschlossen, so dass das Lamellenpaket ein monolithisches Kanalsystem mit mehreren druckfesten Hauptverteilungskanälen bildet.

Figur 8a zeigt den Längsschnitt durch den Stoffverteiler 80 des Hauptverteilungskanals 84 mit einer zuführenden Öffnung 85 und mehreren ableitenden Öffnungen 86, an denen steuerbare Ventile 704 angeschlossen sind. Die steuerbaren Ventile 704 können einseitig in die obere Lamelle 81 eingeschweißt, oder mit Schrauben fest mit dem als Montageeinheit ausgebildeten Stoff-Verteilereinheit 80 verbunden sein, wobei verschraubte Ventile 704 mit einer hier nicht dargestellten elastischen Dichtung zur Versorgungseinheit abgedichtet sind.

In Figur 9 ist die besondere Ausführungsform eines speziell entwickelten Plattenventils dargestellt. Das Ventil steht in Verbindung mit einer kompakten Stoff-Verteilereinheit 702 mit getrennten Hauptverteilungs-Kanälen, wobei sich die Abzweiger der Kanäle 97 und 98 in übereinander liegenden getrennten Ebenen kreuzen. An der Austrittsöffnung eines abzweigenden Kanals 910 befindet sich direkt angeschraubt das Plattenventil 704. Die Stoff-Verteilereinheit 702 besteht hier aus sechs Metalllamellen (91-96), wobei fünf Lamellen durch Ausnehmungen strukturiert sind. Die Lamellen sind der Ventilbreite angepasst, um in einem engen Bereich von den zuführenden Stoff-Hauptverteilungskanälen 97-99 drei abzweigende Kanäle 910 mit steuerbarem Ventil ausrüsten zu können. Die Verbindungsstelle von Stoff-Verteilereinheit 702 und Plattenventil 704 ist mit einer elastischen Dichtung 917 zur Umgebung gedichtet. Von den Platten 911-916 stellt die Platte 915 eine elastische Flachdichtung dar, die den Pneumatikraum dichtet.

Das Plattenventil 704 besitzt in dieser Ausführungsform sechs Platten und einem innenliegenden abgesetzten Zylinder mit Spindel 918. Der innenliegende Zylinder mit Spindel 918 sitzt in mehreren elastische Dichtungen 919, 920, 925, wobei die Dichtung 925 im Teil 911 gleichzeitig den Dichtsitz des Ventils bildet und im geschlossenen Zustand den Stoffdurchgang vom Hauptverteilungskanal 97 - 99 zum Austrittskanal 927 des Plattenventils 704 verhindert. Die Dichtung 919 dichtet den von Produkt berührten Raum des Ventils zum Steuerkopf, dem pneumatischen Druckluftraum bzw. zur Umgebung ab. Die Dichtung 920 schließt den steuernden Druckluftraum 921 des Zylinders 918 ab. Die Kopfplatte 916, die gleichzeitig den Zylinder 918 mit einer elastischen Dichtung 922 aufnimmt, besitzt zwei Anschlussöffnungen 923, 924 um den Zylinder mit Steuerluft zu versorgen.

Die Anschlussöffnung 923 bewirkt, dass bei Druckluftzufuhr der Zylinder mit Spindel angehoben wird und dabei die geformte Zylinderspitze aus dem elastischen Dichtsitz 925, (Fig. 9b) gehoben wird und den Stoffdurchfluss frei gibt. Erfolgt die Druckluftzufuhr über die Anschlussöffnung 924, bei gleichzeitiger Entspannung des Druckluft-Anschlusses an der Öffnung 923, so wird der Zylinder mit Spindel in den elastischen Dichtsitz 925 heruntergedrückt und der Stoffdurchfluss ist unterbrochen. Die je nach Zylinderstellung durchströmende Stoffmenge verlässt das Plattenventil über den Kanal 927. An der Austrittstelle des Kanals 927 sind weiterführende Bauteile wie Kapillaren, Behälter, Temperierelemente oder der Einzelreaktor direkt angeschlossen. Der Zylinder 918 stellt durch vorhandene unterschiedlich große Druckangriffsflächen einen Druckübersetzer dar. Der größte anstehende Druck, in der Regel ein Prozessdruck, wirkt dabei auf die kleinste Fläche an der Spindelspitze und der steuernde Druck, in der Regel die Druckluft, auf die größte Fläche am Zylinderkopf. In Ausnahmefällen kann das Plattenventil an hydraulische Versorgungs-Systeme für die Steuerung, die wesentlich höhere Drücke erzeugen können, angeschlossen werden. In diesen Fällen kann die obere Wirkfläche des Zylinders wesentlich kleiner sein.

Die Figuren 9a und 9b zeigen baugleiche Plattenventile 704, auf der gemeinsamen kompakten Stoff-Verteilereinheit 702, wobei mehrere Plattenventile 704 hintereinander auf der Verteilereinheit 702 angebracht sind, und mit dem gleichen Hauptverteilungskanal verbunden sind.

In der Figur 10 ist die Verknüpfung der für eine Versuchsdurchführung verwendeten verschiedenen Softwareeinheiten schematisch wiedergegeben.

Aus der Bibliothek, in der alle Softwareeinheiten hinterlegt sind, kann der Bediener seine spezifische Versuchsdurchführung gemäss den Softwareeinheiten zusammenstellen, in dem aus der Bibliothek die benötigten Softwareeinheiten kopiert und auf einem Arbeitsblatt abgelegt und miteinander verbindet. Ein typischer Versuchsablauf setzt sich folgendermaßen zusammen. Auf die Softwareeinheit 1002 "Systemcheck" folgt die Softwareeinheit 1003 "Dichtigkeitsprüfung" für alle Reaktoreinheiten. Alle Reaktoreinheiten werden bei einem empfindlichen Prozess inertisiert unter Verwendung der Softwareeinheit 1004. Das Inertisieren erfolgt durch Verdrängung oder Verdünnung des Kammerinhaltes. Der Bediener wünscht des weiteren, dass z.B. drei Reaktoreinheiten mit einer Temperatur von 100°C, mittels der Softwareeinheit "Temperieren" 1006 und drei Reaktoreinheiten mit einer Temperatur von 130°C betrieben werden sollen. Des weiteren soll die Synthese in den Einzelbehältern unter ständigem Rühren, mit der Softwareeinheit 1007 "Rühren" erfolgen.

Zusätzlich folgt eine druckgesteuerte Substanzdosierung mit Softwareeinheit 1008 "Dosieren" mit wählbarer Dosierhubzahl pro Versuch.

Ist der Versuch in den Einzelreaktoren beendet, werden alle Einzelreaktoren mit der Softwareeinheit 1009 "Versuch beenden" in einen definierten Endzustand gebracht. Sind alle Versuche beendet, erfolgt die Übertragung der Versuchsdaten mit der Softwareeinheit 1010, und im Anschluss erhält der Bediener die Information der Fertigmeldung mit der Softwareeinheit 1011.

### Versuchsbeispiel

Im folgenden wird der Aufbau und der Betrieb eines modular und miniaturisiert aufgebauten parallelisierten Versuchssystems beschrieben, in dem ein Katalysator für eine Polymerisation unter chemischen und verfahrenstechnischen Aspekten getestet und die Wirkungsweise untersucht werden soll. Dieser Versuch ist bei einer Temperatur von bis zu 200°C und einem Druck von bis zu 16 bar durchgeführt worden, obwohl das technische Versuchssystem für wesentlich höhere Druck- und Temperaturanforderungen ausgelegt und gebaut worden ist. Die maximale Betriebstemperatur des Versuchs wurde durch stoffspezifische Sicherheitsgrenzwerte limitiert. Ein Substanzvolumen pro Einzelreaktor 1 von ca. 8ml wurde für den parallelisierten Versuch gewählt. Daraus resultierte die maximal zu dosierenden verflüssigte Monomermenge und die Menge an vorgelegtem Basis-Polymer und Reaktionsbeschleuniger. Das vorgelegte flüssige Basis-Polymer und der Reaktionsbeschleuniger sind mittels einer Waage in Rollrandgläschen eingefüllt worden, anschliessend wurden die Rollrandgläschen in die jeweiligen Einzelreaktoren 1 gesteckt und die Verschlussdeckel aufgelegt, um das automatisierte Verschließen der unter Druck betriebenen geschlossenen Einzelbehälter zu ermöglichen.

Das modular aufgebaute Versuchssysstem bestand aus sechs parallel angeordneten Einzelreaktoren 1 (Figur 2) mit einem Versuchsraumvolumen von ca. 25 ml, wobei die Einzelreaktoren 1 mit einer für die verfahrenstechnische Versuchsanforderung erforderlichen erfindungsgemässen Deckelvariante 28 (Fig. 6h) und einem Temperatursensor 7 ausgerüstet waren. Sechs Einzelreaktoren sind in einer gemeinsamen Aufnahmeeinheit 211 (Figur 2) mit einem simultan arbeitenden Verschlussriegel 11, der mit einem pneumatischen Antrieb 11c versehen ist, eingesetzt. Als Probengefäß 12 diente ein Rollrandgläschen, in dem ein Magnetrührer eingelegt ist. Der Magnetrührer wurde mit einem Elektro-Motor 4 und einer Magnetkupplung (Figur 2) angetrieben, wobei der Antrieb unterhalb des Einzelreaktors positioniert war. Die Einzelreaktoren wiesen die elektrische Heizeinrichtung 31 nach Figur 4 und eine Kühleinrichtung 32 nach Figur 4c auf. Aufgrund der exothermen Polymerisation war es erforderlich, eine zwei-kanalige Kühleinrichtung einzusetzen, die eine simultane Kühlung mit Luft und Wasser ermöglicht. Die Heizeinrichtung 31 wurde mit zwei weiteren Temperatursensoren 7 bestückt, um die Möglichkeit einer Kaskadenregelung nach der Innentemperatur des Einzelbehälters zu realisieren und der zweite Temperatursensor diente der sogenannten Übertemperatursicherung (integrierte Sicherheit), die es gestatten sollte, während einer automatisierten Fahrweise, auf eine Personalüberwachung zu verzichten.

Die druckfeste Kammer 2a (Figur 5a) war für diese Anwendung im Flanschbereich mit Zuleitungen 131 und Ableitungen 132 versehen.

Unterhalb der Einzelreaktoren 1 waren direkt an der Aufnahmeeinheit zwei kompakte Stoff-Verteiler 702 (ähnlich Figur 9) mit direkt aufgesetzten Plattenventilen 704 für die Versorgung der sechs Einzelreaktoren montiert. Ein Stoff-Verteiler mit drei Hauptverteilungskanälen versorgte die Kühleinrichtung, wobei beispielsweise Verteilungskanal 97 für die Kühlluftversorgung, Kanal 98 für die Kühlwasserversorgung und Kanal 99 für die Ableitung beider Kühlmittel verwendet wurde. Die abführenden Leitungen 32b ( Figur 4b) des Kühlmoduls waren zusammengefasst und direkt mit dem Stoff-Verteiler verbunden, so dass für den Ableitungskanal 99 kein steuerbares Plattenventil benötigt wurde.

Der zweite kompakte Stoff-Verteiler dient der Versorgung der Einzelbehälter. Dabei wurden die Haupt-Verteilungskanäle 97, 98, 99 für folgende Aufgabe genutzt; Kanal 99 für den Anschluss an eine Vakuumpumpe, Kanal 98 für die Versorgung mit Stickstoff und Kanal 97 für eine gezielte Belüftung der Einzelreaktoren. Die Zuleitung und Ableitung von Medien für die Einzelreaktoren 1 erfolgte in dieser Versuchsführung zu unterschiedlichen Zeiten. Deshalb waren alle Austrittsöffnungen des Stoff-Verteilers mit steuerbaren Plattenventilen bestückt und die Stoff-Austrittsöffnungen 927 (Figur 9) der Plattenventile gemeinsam mit einer Anschlussöffnung der druckfesten Kammer verbunden. Eine weitere Anschlussöffnung im Flanschbereich der druckfesten Kammer diente der Anschlussmöglichkeit eines Drucksensors 717 und einer selbstätigen Sicherheitseinrichtung 709 (Figur 7). Unterhalb der Aufnahmeeinheit der Einzelreaktoren waren erforderliche elektro-pneumatische Ventile (Umsetzer) und Interface-Module 714, 724, in Form von Sensor- und Aktorplatinen, positioniert. Dort wurde mit extrem kurzen elektrischen Leitungen von den einzelnen Sensoren und Aktoren die Verbindung von Interface-Modul zur Kontrolleinheit 700 mittels mehradrigen Flachbandkabeln 715 realisiert, so dass eine Kommunikation zwischen Kontrolleinheit und PC mittels entsprechender Softwareblöcke mit dem verfahrenstechnischen Prozess sichergestellt werden konnte. Der mit Ringspaltdosierer versehene Deckel (28), der zur Dosierung von Kleinstmengen verflüssigter Monomerer in einen Druckraum diente, war an eine Versorgungsplatte, die in diesem speziellen Fall nicht als Stoff-Verteiler ausgebildet war, angeschlossen. Diese Versorgungseinheit oder -platte enthielt folgende Komponenten: Das Multi-Positionierventil, welches die Ringspaltdosierer sequenziell bei Bedarf mit verflüssigtem Monomer versorgt, die Aufnahme der elektro-pneumatischen Ventile zur Steuerung der Kolben in den Ringspaltdosierern, die ableitenden Hauptkanäle der Einzelreaktor-Belüftungen und der Austrittsöffnungen der selbstätigen Sicherheitseinrichtungen (Berstscheiben) zu den zentralen Entsorgungseinheiten des Labors.

Für den automatisierten Betrieb wurden aus der Software-Bibliothek folgende Softwareeinheiten in bestimmter Reihenfolge (Figur 10) kombiniert:
- Systemchek 1002
- Dichtigkeitsprüfung 1003
- Inertisieren 1 mit Vakuumfahrweise 1004
- Stickstoff-Vordruck 1005
- Temperieren 1006
- Rühren 1007
- Dosieren 1008
- Versuch beenden 1009
- Datenübertragung 1010
- Fertigmelden 1011

Die Softwareeinheiten 1002, 1003, 1004, 1005 wurden in Reihe verknüpft und mussten vollständig abgearbeitet sein, um die parallel verschalteten Software-Module Temperieren 1006, Rühren 1007 und Dosieren 1008 - das eigentliche Experiment, nämlich die Polymerisation - starten zu können. Die Synthese wurde, nach Abschalten der Einzelreaktor-Heizungen gestartet, indem bei Erreichen der eingestellte Reaktor-Innentemperatur das Software-Modul Dosieren 1008, hier speziell mit individuell für jeden Einzelreaktor voreingesteller Teil- und Gesamthubanzahl, gestartet wurde. Bei Erreichen der für jeden Einzelreaktor eingestellten Gesamtdosierhubzahl wurde der Versuch im jeweiligen Reaktor mit Software-Modul 1009 beendet. Zum Schluss erfolgte die Datenübertragung 1010 und das Fertigmelden 1011, so dass der Bediener das parallele Reaktorsystem ohne Gefahr öffnen konnte, um die Probengefäße zu entnehmen und der Analytik zu zuführen.

Der automatisierte, chemisch verfahrenstechnische Versuch benötigte mit allen vorbereitenden Arbeiten ca. zwei Stunden, so dass mehrere Versuchsserien pro Arbeitstag gefahren werden konnten. Hierbei erwies sich u.a. der simultane Verschluss der Reaktoren als besonders zeitsparend.

Die erwartete hohe Reproduzierbarkeit der Reaktionsführung bei gleichen chemischen Ansätzen und gleichen Verfahrensweisen konnte mittels Analyse der Produktlösung bestätigt werden. Weitere Versuche bei gleicher Verfahrensweise bestätigten unterschiedliche Aktivitäten bei der Variation von Reaktionsbeschleunigern. Dieser exotherme Polymerisationsversuch bestätigte insbesondere, dass eine massen-optimierte und schnell reagierende Heiz-/Kühleinrichtung für miniaturisierte Parallelversuche notwendig ist, damit chemische und physikalische Versuche unter verfahrenstechnischen Bedingungen reproduzierbar durchgeführt werden können und Aufheiz- und Kühlzeiten des gesamten Reaktorsystems klein gehalten werden müssen, um eine aussagekräftige Auswertung aus der Analyse der Versuchsergebnisse zu ermöglichen. Des weiteren konnte festgestellt werden, dass durch die individuelle Temperaturführung der Reaktoren keine gegenseitige Temperaturbeeinflussung der Einzelreaktoren trotz enger und kompakter Bauweise erfolgte. Die individuelle Reaktorführung hinsichtlich Druck, Temperatur und beispielsweise Rührleistung ist für ein effektives Arbeiten mit parallelisierten Reaktorsystemen eine wesentliche Grundlage für einen wirtschaftlichen Versuchsbetrieb.

Die Aufheizzeiten von ca. 10 Minuten waren im Vergleich zur eigentlichen Synthesezeit gering. Geringe bauliche Abweichungen der Einzelreaktoren untereinander, z.B. aufgrund der Fertigungstoleranzen, wirken sich bei miniaturisierten, chemischverfahrenstechnischen Experimenten überproportional aus.

Deshalb ist eine individuelle Steuerung der Einzelreaktoren unabdingbar, da anderenfalls die im Anwendungsfall erforderliche Genauigkeit (Vergleichbarkeit) nicht gegeben wäre.

Des weiteren ist das softwaremässige simultane Zuschalten von unterschiedlichen Temperiermedien mit verschiedenen Wärmekapazitäten in Abhängigkeit von der Reaktor-Innentemperatur bedeutend für die reproduzierbare, verfahrenstechnische Prozessführung. Wird beispielsweise nur mit Wasser gekühlt, kann der verfahrenstechnsiche Prozess und damit die Produkttemperatur im Innern des Reaktors nicht konstant gehalten werden, da der Wärmeabfluss überwiegt. Im ungünstigsten Fall erfolgt eine Unterbrechung der Synthese und bei Druckreaktionen ein Abfall des Innendrucks.

Die durchgeführten Versuche verliefen unter Druck. Gleichzeitig konnte die Reaktion anhand des Druckabfalls, der aus dem Verbrauch des dosierten Monomers resultierte, bei konstanter Temperatur verfolgt werden. Des weiteren zeigte sich besonders vorteilhaft der Einsatz der kompakten Stoffverteiler 702 in unmittelbarer Nähe der Einzelreaktoren 1. Er vergrößerte den eigentlichen Reaktionsraum des Einzelbehälters unwesentlich, so dass der gebildete Dampfdruck der dosierten Komponente im Innern des Reaktors am Prozessleitsystem (Kontrolleinheit 700) mit PC sofort erkennbar wurde. Für die Bedienung und Automatisierung zeigte sich positiv, dass bei Einsatz der Stoff-Verteiler mit steuerbaren Plattenventilen nur wenige Leckagemöglichkeiten existierten und eine automatisierte Druckfahrweise mit nachvollziehbarer Druckprobe ohne Probleme durchführbar war.

Die automatisierte Fahrweise wurde so gewählt, dass die Versuche direkt in einen Technikums-Maßstab überführt werden können. Die gewählten und eingesetzten Sicherheitseinrichtungen und -steuerungen ließen eine weitestgehende personalfreie Versuchsdurchführung zu, so dass nur wenige manuelle Handeingriffe zur Vorbereitung der Parallel-Versuche notwendig waren und dadurch die Fehlerquote durch individuellen Einflüsse des Experimentators entsprechend reduziert werden konnte.

## Patentansprüche

1. Vorrichtung zur parallelen Durchführung von Experimenten an Prozessstoffen für die Entwicklung von technischen Verfahren, insbesondere von chemischen und physikalischen Verfahren bestehend wenigstens aus einer Vielzahl, insbesondere mindestens 6, bevorzugt mindestens 12, besonders bevorzugt mindestens 24 Einzelreaktoren (1) zur Aufnahme der Prozessstoffe (10), wobei die Einzelreaktoren (1) unabhängig voneinander wenigstens bezüglich ihres inneren Drucks und ihrer Temperatur steuerbar oder regelbar sind, **dadurch gekennzeichnet, dass** die Einzelreaktoren (1) mindestens aufgebaut sind aus:
je einer druckfesten Kammer (2, 2a, 2b, 2c, 2d, 2e,) mit einem separierbaren Probengefäß (12), gegebenenfalls je einer Rührvorrichtung (4),
je einer Heizeinrichtung (31) und/oder einer Kühleinrichtung (32) zur individuellen Temperierung des Probengefäßes (12),
einer Kontrolleinheit (700) zur Kontrolle oder Regelung wenigstens des Drucks und der Temperatur in den Einzelreaktoren (1),
je einem druckfesten Deckel (21; 22; 23; 24; 25; 26....29), wobei die einzelnen Deckel (21; 22; 23; 24; 25; 26;....29) und/oder die Kammern (2, 2a, 2b, ..... 2e) unabhängig voneinander Zuleitungen (8) und gegebenenfalls Ableitungen (9) für einzelne Prozessstoffe aufweisen, und mehrere Deckel (21; 22; 23; 24; 25; 26....29) der Kammern (2, 2a, 2b, 2c, 2d, 2e,) mittels eines gemeinsamen Verschlussmittels (11) simultan verschließbar sind.

2. Vorrichtung nach Anspruch 1, **dadurch gekennzeichnet, dass** das Verschlussmittel ein Verschlussriegel (11) ist, der pneumatisch, hydraulisch oder mittels elektrischem Antrieb verriegelbar ist.

3. Vorrichtung nach Anspruch 1 oder 2, **dadurch gekennzeichnet, dass** mehrere Einzelreaktoren (1) blockweise in einer Aufnahmeeinheit (211) zusammengefasst sind.

4. Vorrichtung nach einem der Ansprüche 1 bis 3, **dadurch gekennzeichnet, dass** die Deckel (21; 22; 23; 24; 25; 26...29) zusätzlich Druckminderleitungen (13) aufweisen.

5. Vorrichtung nach einem der Ansprüche 1 bis 4, **dadurch gekennzeichnet, dass** die Heizeinrichtung (31) und/oder die Kühleinrichtung (32) der Kammern (2, 2a, 2b, 2c, 2d, 2e,) von den Kammern (2, 2a, 2b, 2c, 2d, 2e,) separierbar ausgebildet sind.

6. Vorrichtung nach einem der Ansprüche 1 bis 5, **dadurch gekennzeichnet, dass** die Kühleinrichtung (32) mit wechselnden Temperiermedien und/oder simultan mit verschiedenen Temperiermedien, insbesondere mit Luft, Öl und Wasser betreibbar ist, deren Zulauf durch die Kontrolleinheit (700) steuerbar oder regelbar ist.

7. Vorrichtung nach einem der Ansprüche 1 bis 6, **dadurch gekennzeichnet, dass** die Einzelreaktoren (1) über den gesamten Bereich von 1 bar bis 400 bar und von -80°C bis +400°C und/oder gegebenenfalls bezüglich ihrer Rührerdrehzahl bis 2 000 upm unabhängig voneinander steuerbar sind.

8. Vorrichtung nach einem der Ansprüche 1 bis 7, **dadurch gekennzeichnet, dass** die Probengefäße (12) mit den Kammern (2, 2a, 2b, 2c, 2d, 2e,) einstückig ausgebildet sind.

9. Vorrichtung nach einem der Ansprüche 1 bis 8, **dadurch gekennzeichnet, dass** die Böden der Probengefäße (12) im wesentlichen planar sind und gegenüber der Horizontalen um einen Winkel α von 5 bis 60° angestellt sind.

10. Vorrichtung nach einem der Ansprüche 1 bis 9, **dadurch gekennzeichnet, dass** zwei oder mehr Einzelreaktoren (1) über ihre Stoffzuleitungen (8) und Ableitungen (9) in Serie miteinander verbunden sind.

11. Vorrichtung nach Anspruch 8, **dadurch gekennzeichnet, dass** jeweils zwei benachbarte in Serie miteinander verbundene Einzelreaktoren (1) auf unterschiedlicher Höhe angeordnet sind.

12. Vorrichtung nach Anspruch 9 oder 10, **dadurch gekennzeichnet, dass** jeweils zwei benachbarte in Serie miteinander verbundene Einzelreaktoren (1a, 1b) unter verschiedenem Druck betreibbar sind und in die Verbindungsleitung (8; 9) zwischen den Einzelreaktoren (1a, 1b) ein Förderaggregat (312) geschaltet ist.

13. Vorrichtung nach einem der Ansprüche 1 bis 12, **dadurch gekennzeichnet, dass** die Stoffzuleitungen (8) und Ableitungen (9) und gegebenenfalls Druckminderleitungen (13) mit einer Stoffverteilereinheit (702a) und/oder einer Versorgungseinheit (701) verbunden sind, die die Zuleitungen (8; 705) und Ableitungen (9; 725) und gegebenenfalls Druckminderleitungen (13) wahlweise untereinander und/oder mit einer Hauptstoffzuführungsleitung (713) einer Hauptstoffableitung (727) und gegebenenfalls einer Hauptdruckminderleitung (706) verbindbar macht.

14. Vorrichtung nach Anspruch 13, **dadurch gekennzeichnet, dass** der Stoffverteilereinheit (702a) aus mehreren, insbesondere mindestens drei, fest miteinander verbundenen, in Schichten übereinander liegenden Metalllamellen (81, 82, 83) aufgebaut ist, in die Stoffkanäle (84) und gegebenenfalls Vakuumkanäle (87) sowie Eingänge (85) und Ausgänge (86) eingelassen sind.

15. Vorrichtung nach Anspruch 14, **dadurch gekennzeichnet, dass** die jeweils oberste Lamelle (81) Eingänge (85) zu externen Versorgungsleitungen aufweist, die jeweils unterste Lamelle (83) Ausgänge (86) zu den Reaktorleitungen (8, 9, 13) aufweist und die mittlere Lamelle(n) (82) Verbindungskanäle (84; 87) aufweist.

16. Vorrichtung nach Anspruch 14 oder 15, **dadurch gekennzeichnet, dass** die Ausgänge (86) der Stoffverteilereinheit (702a) mit den Zuleitungen (8) oder den Ableitungen (9) der Einzelreaktoren (1) über schaltbare oder regelbare Ventile (704) verbunden sind.

17. Vorrichtung nach Anspruch 16, **dadurch gekennzeichnet, dass** die Ventile (704) mit der Stoffverteilereinheit (702; 702a; 80) direkt verbunden sind.

18. Vorrichtung nach Anspruch 16 oder 17, **dadurch gekennzeichnet, dass** die Ventile (704) pneumatisch steuerbar sind.

19. Vorrichtung nach Anspruch 18, **dadurch gekennzeichnet, dass** die Ventile (704) selbstschließend bei Ausfall der pneumatischen Steuerung ausgebildet sind.

20. Vorrichtung nach einem der Ansprüche 1 bis 19, **dadurch gekennzeichnet, dass** die Kontrolleinheit (700) zusätzlich die Drehzahl der Rührvorrichtungen (4) steuert oder regelt.

21. Vorrichtung nach einem der Ansprüche 16 bis 20, **dadurch gekennzeichnet, dass** die Kontrolleinheit (700) zusätzlich die Stellung der Ventile (704) steuert oder regelt.

22. Vorrichtung nach einem der Ansprüche 1 bis 21, **dadurch gekennzeichnet, dass** die Probengefäße (12) aus den Kammern (2, 2a, 2b, 2c, 2d, 2e,) separierbar ausgebildet sind und entweder zwischen dem oberen Rand der Probengefäße (12) und der Kammerwand oder zwischen der Deckelwand und der Oberkante der Probengefäße (12) ein zusätzliches Dichtmittel (51) vorgesehen ist.

23. Vorrichtung nach Anspruch 22, **dadurch gekennzeichnet, dass** zwischen dem Reaktionsraum der Probengefäße (12) und dem Zwischenraum zwischen den Probengefäßen (12) und der Kammerwand der Einzelreaktoren (1) Druckausgleichskanäle (137) vorgesehen sind.

24. Vorrichtung nach einem der Ansprüche 1 bis 23, **dadurch gekennzeichnet, dass** die Vorrichtung modular aufgebaut ist, wobei die Einzelreaktoren (1) die Heizeinrichtung (31), die Kühleinrichtung (32), die Kontrolleinheit (700), die Rührvorrichtung (4), gegebenenfalls die Stoffverteilereinheit (702a) und gegebenenfalls die Versorgungseinheit (701) unabhängig voneinander wechselbar ausgebildet sind.

25. Verfahren zur Durchführung von parallelen Versuchen an Prozessstoffen unter Verwendung einer Vorrichtung nach einem der Ansprüche 1 bis 24, **dadurch gekennzeichnet, dass** wenigstens folgende Verfahrensschritte durchgeführt werden:
a) Prüfen der Versorgungsleitungen zu den Einzelreaktoren (1)
b) Eingeben der Versuchsproben in die Probengefäße (12) der Einzelreaktoren (1),
c) Schließen und Dichtigkeitsprüfung der Einzelreaktoren (1),
d) gegebenenfalls Inertisieren der Reaktionsräume der Einzelreaktoren (1) mittels Druckverminderung und Einleiten von Inertgas,
e) gegebenenfalls Einstellen eines Inertgasvordrucks,
f) Festlegen der Verfahrensparameter insbesondere Grenzwerte und gegebenenfalls zeitliche Gradienten für den Druck, die Temperatur und gegebenenfalls die Rührgeschwindigkeit der Versuchsstoffe,
g) Regeln der Prozesstemperatur und
h) Durchführen des Versuches unter gegebenenfalls Zudosieren weiterer Versuchsstoffe.

26. Verfahren nach Anspruch 25, **dadurch gekennzeichnet, dass** die Versuche physikalische und/oder chemische Reaktionen an Prozessstoffen sind.

27. Verfahren nach Anspruch 26, **dadurch gekennzeichnet**, das bei einer exothermen chemischen Reaktion die Versuchsführung bei konstantem Druck und konstanter Temperatur erfolgt.

28. Verfahren nach Anspruch 27, **dadurch gekennzeichnet, dass** die Eingabe der Versuchsproben gemäß Schritt b) nach dem Schritt g) erfolgt, wobei die Versuchsproben (Einsatzstoffe) auf Reaktionstemperatur vorgeheizt sind.

29. Verfahren nach Anspruch 27, **dadurch gekennzeichnet, dass** mindestens ein flüssiger Einsatzstoff verwendet wird, der druckkontrolliert dem Probengefäß zudosiert wird.
